# EUROPÄISCHE PATENTSCHRIFT

(11) **EP 4 341 138 B1**
(45) Veröffentlichungstag und Bekanntmachung des Hinweises auf die Patenterteilung: **08.07.2026**
(21) Anmeldenummer: 22728875.0
(22) Anmeldetag: 12.05.2022
(51) Int. Cl.: B60T 17/22, B60W 50/00

(54) **PROGNOSESYSTEM UND PROGNOSEVERFAHREN FÜR ZUMINDEST EINE BREMSSYSTEMKOMPONENTE EINES BREMSSYSTEMS EINES FAHRZEUGS**
PREDICTION SYSTEM AND PREDICTION METHOD FOR AT LEAST ONE BRAKING SYSTEM COMPONENT OF A BRAKING SYSTEM OF A VEHICLE
SYSTÈME DE PRÉVISION ET MÉTHODE DE PRÉVISION POUR AU MOINS UN COMPOSANT DE SYSTÈME DE FREINAGE D'UN SYSTÈME DE FREINAGE D'UN VÉHICULE

(30) Priorität: 19.05.2021 DE 102021205089
(43) Veröffentlichungstag der Anmeldung: 27.03.2024
(73) Patentinhaber: Robert Bosch GmbH, 70442 Stuttgart (DE)
(72) Erfinder: ZEUTZIUS, Michael, 71732 Tamm (DE)
(86) Internationale Anmeldenummer: PCT/EP2022/062944
(87) Internationale Veröffentlichungsnummer: WO 2022/243168

(56) Entgegenhaltungen:
- DE-A1- 102017 101 510

## Beschreibung

Die Erfindung betrifft ein Prognosesystem für zumindest eine Bremssystemkomponente eines Bremssystems eines Fahrzeugs. Ebenso betrifft die Erfindung ein Prognoseverfahren für zumindest eine Bremssystemkomponente eines Bremssystems eines Fahrzeugs.

### Stand der Technik

Aus dem Stand der Technik sind Verfahren zum Überwachen eines Kraftfahrzeugs bekannt. Beispielsweise beschreibt die DE 10 2017 218 446 A1 ein Verfahren zum Überwachen eines Kraftfahrzeugs mit automatisierter Fahrfunktion, bei welchem insbesondere ein Energiespeicher, welcher zumindest einen zum Überführen des Kraftfahrzeugs in seinen Stillstand ausgebildeten Verbraucher versorgt, überwacht wird.

Zusätzlich beschreibt die DE 10 2017 101 510 A1 eine Vorrichtung zum Diagnostizieren, Prognostizieren und Berichten des Gesundheitszustands eines Fahrzeugbremssystems, mittels welcher ein Pedalweg, eine Pedalkraft, relevante Operationen oder Zustände des Bremssystems, eine Fahrzeuggeschwindigkeit und eine Beschleunigung/Verzögerung des Fahrzeugs bezüglich Abweichungen von ihren Normalbereichen untersuchbar und zum Bestimmen des Gesundheitszustands des Fahrzeugbremssystems auswertbar sind.

### Offenbarung der Erfindung

Die Erfindung schafft ein Prognosesystem für zumindest eine Bremssystemkomponente eines Bremssystems eines Fahrzeugs mit den Merkmalen des Anspruchs 1 und ein Prognoseverfahren für zumindest eine Bremssystemkomponente eines Bremssystems eines Fahrzeugs mit den Merkmalen des Anspruchs 8.

### Vorteile der Erfindung

Die vorliegende Erfindung schafft vorteilhafte Möglichkeiten nicht nur zur Überwachung, sondern auch zur Frühdiagnose zumindest einer Bremssystemkomponente eines Bremssystems eines Fahrzeugs. Die vorliegende Erfindung ermöglicht somit nicht nur eine Erkennung eines bereits erfolgten Ausfalls zumindest der einen Bremssystemkomponente des jeweiligen Bremssystems, sondern auch eine Vorhersage bezüglich einer zukünftigen Funktionsfähigkeit und eines zukünftigen Betriebsverhaltens zumindest der einen Bremssystemkomponente des Bremssystems. Wie nachfolgend genauer erläutert wird, kann für eine Vielzahl von verschiedenen Bremssystemkomponenten, wie beispielsweise für einen einem Hauptbremszylinder des jeweiligen Bremssystems vorgelagerten elektromechanischen Bremskraftverstärker und/oder für eine in das jeweilige Bremssystem integrierte motorisierte Plungervorrichtung (wie speziell einer IPB, Integrated Power Brake), deren zukünftige Funktionsfähigkeit mittels der vorliegenden Erfindung verlässlich prognostiziert werden. Da mittels einer Nutzung der vorliegenden Erfindung eine zukünftige Funktionsbeeinträchtigung oder ein zukünftiger Ausfall zumindest der einen Bremssystemkomponente des jeweiligen Bremssystems frühzeitiger vorhersagbar ist, eignet sie sich auch vorteilhaft zum Absichern eines autonomen Fahrens des mit dem jeweiligen Bremssystem ausgestatteten Fahrzeugs.

Ein besonderer Vorteil der vorliegenden Erfindung besteht darin, dass sich mit ihr insbesondere dynamische Bremsbetätigungen und/oder von der jeweiligen Brems- oder Fahrzeugsteuerautomatik und/oder dem Regler des Fahrzeugs angeforderte Bremsungen mit hohen dynamischen Lasten zur Prognose eines möglichen Auftretens zumindest einer Funktionsbeeinträchtigung an zumindest der einen Bremssystemkomponente des Bremssystems nutzen lassen. Die vorliegende Erfindung berücksichtigt damit, dass vor allem bei Bremsungen mit hohen und/oder dynamischen Lasten mit einer relativ hohen Wahrscheinlichkeit Anzeichen für eine baldige Funktionsbeeinträchtigung oder sogar einen Ausfall zumindest der einen Bremssystemkomponente detektierbar sind, während bei langsamen/quasistatischen Bremsungen vergleichsweise selten derartige Anzeichen detektierbar sind. Damit ist es besonders vorteilhaft, wenn nur Bremsungen mit hohen und/oder dynamischen Lasten zur Prognose der weiteren Funktionsfähigkeit der zumindest einen Bremssystemkomponente ausgewertet werden. Auf diese Weise kann ein für die Prognose aufzubringender Arbeitsaufwand deutlich reduziert werden. Ebenso kann auf diese Weise häufig auch ein Speicherbedarf der zur Prognose verwendeten Elektronik reduziert werden.

Insbesondere eine wahrscheinliche maximale Fahr-Reichweite kann mittels des Prognosesystems verlässlich geschätzt werden, indem auch mindestens eine Umgebungsbedingung bei der Prognose mitberücksichtigt wird. Da das Bremsverhalten des Fahrzeugs häufig auch durch Umgebungsbedingungen beeinträchtigt ist, kann das Mitberücksichtigen mindestens eines Umgebungsparameters die mittels des Prognoseverfahrens ausgeführte Prognose zusätzlich verbessern.

In einer vorteilhaften Ausführungsform des Prognosesystems sind die erste Elektronikeinrichtung und/oder die zweite Elektronikeinrichtung dazu ausgelegt und/oder programmiert, die Wertegruppen in ein Koordinatensystem einzutragen mit mindestens einer die mindestens eine erste Größe anzeigenden ersten Achse und mindestens einer die mindestens eine zweite Größe anzeigenden zweiten Achse. Ein derartiges Koordinatensystem mit den eingetragenen Wertegruppen kann vorteilhaft für die anschließende Prognose ausgewertet werden.

Als vorteilhafte Weiterbildung kann die erste Elektronikeinrichtung zusätzlich dazu ausgelegt und/oder programmiert sein, Wertegruppen zu ermitteln, welche zusätzlich zu der mindestens einen ersten Größe und der mindestens einen zweiten Größe noch einen Reibwert einer gleichzeitig von dem Fahrzeug befahrenen Fahrbahn als den Umgebungsparameter umfassen. Dies ermöglicht bei der anschließenden Prognose einen speziellen "Vergleich" des erfassten Reibwerts mit einer Relation zwischen der mindestens einen ersten Größe und der mindestens einen zweiten Größe. Auf diese Weise kann frühzeitig erkannt werden, ob die zumindest eine Bremssystemkomponente des Bremssystems noch "wunschgemäß" auf eine von dem Fahrer, der Brems- oder Fahrsteuerautomatik des Fahrzeugs und/oder dem Regler des Fahrzeugs angeforderte Bremsung reagiert. Anschließend kann die gewonnene Erkenntnis zur Prognose für zumindest die eine Bremssystemkomponente herangezogen werden.

Beispielsweise sind die erste Elektronikeinrichtung und/oder die zweite Elektronikeinrichtung dazu ausgelegt und/oder programmiert, die Wertegruppen in das Koordinatensystem einzutragen, welches zusätzlich zu der mindestens einen ersten Achse und der mindestens einen zweiten Achse noch mindestens eine den Reibwert anzeigende Reibwert-Achse oder den Reibwert anzeigende Sektoren in einer von der oder einer der ersten Achsen und der oder einer der zweiten Achsen aufgespannten Ebene umfasst. Das Koordinatensystem kann damit zur Verifikation, ob sich die jeweilige Relation zwischen der mindestens einen ersten Größe und der mindestens einen zweiten Größe gemäß dem jeweiligen Reibwert verhält, vorteilhaft genutzt werden.

Bevorzugter Weise sind die erste Elektronikeinrichtung und/oder die zweite Elektronikeinrichtung dazu ausgelegt und/oder programmiert, die Wertegruppen in das Koordinatensystem einzutragen, welches zusätzlich zu der mindestens einen ersten Achse und der mindestens einen zweiten Achse noch mindestens eine die mindestens eine dritte Größe anzeigende dritte Achse umfasst. Damit können die Vielzahl von verschiedenen Größen auf einfache Weise, schnell und verlässlich durch die im Weiteren beschriebene Auswertung des Koordinatensystems bezüglich eines möglichen Auftretens zumindest einer Funktionsbeeinträchtigung an zumindest der einen Bremssystemkomponente untersucht werden.

Vorzugsweise sind die erste Elektronikeinrichtung und/oder die zweite Elektronikeinrichtung dazu ausgelegt und/oder programmiert, den in das Koordinatensystem eingetragenen Wertegruppen jeweils Bremsenbetriebspunkte zuzuordnen und unter zusätzlicher Berücksichtigung einer Verteilung der Bremsenbetriebspunkte abzuschätzen, ob ein Auftreten zumindest einer Funktionsbeeinträchtigung an zumindest der einen Bremssystemkomponente des Bremssystems zumindest während des vorgegebenen Prognosezeitintervalls wahrscheinlich ist. Dies verbessert die mittels der hier beschriebenen Ausführungsform des Prognosesystems ausgeführte Prognose für zumindest die eine Bremssystemkomponente des Bremssystems, indem mittels der hier beschriebenen Technik dafür gesorgt wird, dass Wertegruppen für Bremsungen mit hohen und/oder dynamischen Lasten als korrekte Betriebszustände des Bremssystems mit einem Bremsenkennfeld des Koordinatensystems abgeglichen werden und nicht als Fehlfunktion interpretiert werden.

In einer besonders vorteilhaften Ausführungsform des Prognosesystems ist die erste Elektronikeinrichtung an dem Fahrzeug montierbar oder montiert und dazu ausgelegt und/oder programmiert, eine erste Kommunikationseinrichtung der ersten Elektronikeinrichtung oder des mit der ersten Elektronikeinrichtung ausgestatteten Fahrzeugs dazu anzusteuern, Daten umfassend die ermittelten Wertegruppen und/oder mindestens ein Koordinatensystem mit den ermittelten Wertegruppen an eine zweite Kommunikationseinrichtung der getrennt von dem Fahrzeug vorliegenden zweiten Elektronikeinrichtung zu übermitteln, wobei die zweite Kommunikationseinrichtung dazu ausgelegt ist, die von der ersten Kommunikationseinrichtung übermittelten Wertegruppen zu empfangen. In diesem Fall ist eine Montage der ebenfalls für die vorteilhafte Prognose verwendeten zweiten Elektronikeinrichtung an dem Fahrzeug nicht notwendig. Bei der hier beschriebenen Ausführungsform des Prognosesystems kann deshalb die zweite Elektronikeinrichtung problemlos mit einem vergleichsweise großen Volumen und/oder einem relativ hohen Gewicht ausgebildet werden. Außerdem kann bei der hier beschriebenen Ausführungsform des Prognosesystems die zweite Elektronikeinrichtung auch von mehreren Fahrzeugen die von den ersten Kommunikationseinrichtungen ihrer ersten Elektronikeinrichtungen übermittelten Wertegruppen/Koordinatensysteme empfangen, sodass die zweite Elektronikeinrichtung des Prognosesystems für eine Vielzahl von Fahrzeugen zur Überwachung und zur Frühdiagnose zumindest der einen Bremssystemkomponente ihres jeweiligen Bremssystems genutzt werden kann.

Die vorausgehend beschriebenen Vorteile sind auch bei einem Ausführen eines entsprechenden Prognoseverfahrens für zumindest eine Bremssystemkomponente eines Bremssystems eines Fahrzeugs gewährleistet.

Bei einer vorteilhaften Ausführungsform des Prognoseverfahrens werden als die mindestens eine erste Größe ein Stangenweg einer an dem Bremspedal angebundenen Eingangsstange, eine Verstellgeschwindigkeit der Eingangsstange, eine von der Brems- oder Fahrsteuerautomatik und/oder dem Regler angeforderte Soll-Motorstromstärke eines Motors einer motorisierten Bremsdruckaufbauvorrichtung des Bremssystems, eine von der Brems- oder Fahrsteuerautomatik und/oder dem Regler angeforderte Soll-Betriebsspannung des Motors der motorisierten Bremsdruckaufbauvorrichtung, ein von der Brems- oder Fahrsteuerautomatik und/oder dem Regler angefordertes Soll-Motordrehmoment des Motors der motorisierten Bremsdruckaufbauvorrichtung, eine von der Brems- oder Fahrsteuerautomatik und/oder dem Regler angeforderte Soll-Leistungsaufnahme des Motors der motorisierten Bremsdruckaufbauvorrichtung, ein von der Brems- oder Fahrsteuerautomatik und/oder dem Regler angeforderter Soll-Verstellweg mindestens eines verstellbaren Kolbens der motorisierten Bremsdruckaufbauvorrichtung und/oder eine von der Brems- oder Fahrsteuerautomatik und/oder dem Regler angeforderte Soll-Pumprate mindestens einer in dem Bremssystem eingesetzten Pumpe ermittelt. Die hier aufgezählten Beispiele für die mindestens eine Bremswunschvorgabegröße sind mittels der herkömmlicherweise bereits an jedem Fahrzeugtyp eingesetzten Sensorik messbar oder verlässlich aus mindestens einem Signal der Brems- oder Fahrsteuerautomatik und/oder dem Regler auslesbar.

Alternativ oder ergänzend können als die mindestens eine zweite Größe ein Hauptbremszylinderdruck in einem Hauptbremszylinder des Bremssystems, mindestens ein Bremsdruck in mindestens einem Radbremszylinder des Bremssystems, eine Motorstromstärke des Motors der motorisierten Bremsdruckaufbauvorrichtung des Bremssystems, eine Betriebsspannung des Motors der motorisierten Bremsdruckaufbauvorrichtung, ein Motordrehmoment des Motors der motorisierten Bremsdruckaufbauvorrichtung, eine Leistungsaufnahme des Motors der motorisierten Bremsdruckaufbauvorrichtung, ein Verstellweg des mindestens einen verstellbaren Kolbens der motorisierten Bremsdruckaufbauvorrichtung, eine Reglerzustand-Information über eine eventuell ausgeführte Bremsdruck-Regelung oder eine eventuell ausgeführte Fahrdynamik-Regelung, mindestens eine Temperatur an und/oder in zumindest der motorisierten Bremsdruckaufbauvorrichtung, eine Pumprate der mindestens einen in dem Bremssystem eingesetzten Pumpe, ein Getriebewirkungsgrad eines an der motorisierten Bremsdruckaufbauvorrichtung angebundenen Getriebes des Bremssystems, mindestens ein Schaltzustand mindestens eines Ventils des Bremssystems, eine mittels des Bremssystems auf das Fahrzeug bewirkte Bremskraft, ein mittels des Bremssystems auf das Fahrzeug bewirktes Bremsmoment, ein Lenkwinkel des Fahrzeugs, eine Gierrate des Fahrzeugs, eine mittels des Bremssystems auf das Fahrzeug bewirkte Fahrzeugverzögerung, eine Längsgeschwindigkeit des Fahrzeugs, eine Quergeschwindigkeit des Fahrzeugs, eine Querbeschleunigung des Fahrzeugs und/oder eine Bordnetzspannung eines Bordnetzes des Fahrzeugs ermittelt werden. Damit kann die hier beschriebene Ausführungsform des Prognoseverfahrens ohne eine Erweiterung der herkömmlicherweise bereits am Fahrzeug verbauten Sensorik ausgeführt werden.

Beispielsweise können als die mindestens eine dritte Größe ein Reibwert einer gleichzeitig von dem Fahrzeug befahrenen Fahrbahn, ein Fahrbahnneigungswinkel, ein Scheibenwischerstatus und/oder eine Außentemperatur ermittelt werden. Auch die hier aufgezählten Beispiele für den mindestens einen Umgebungsparameter lassen sich in der Regel ohne eine Erweiterung der herkömmlicherweise bereits am Fahrzeug verbauten Sensorik bestimmen.

### Kurze Beschreibung der Zeichnungen

Weitere Merkmale und Vorteile der vorliegenden Erfindung werden nachfolgend anhand der Figuren erläutert. Es zeigen:
- Fig. 1 a bis 1h: ein Flussdiagramm und Koordinatensysteme zum Erläutern einer ersten Ausführungsform des Prognoseverfahrens für zumindest eine Bremssystemkomponente eines Bremssystems eines Fahrzeugs;
- Fig. 2a bis 2c: Koordinatensysteme zum Erläutern einer zweiten Ausführungsform des Prognoseverfahrens für zumindest eine Bremssystemkomponente eines Bremssystems eines Fahrzeugs;
- Fig. 3a bis 3e: Koordinatensysteme zum Erläutern einer dritten Ausführungsform des Prognoseverfahrens für zumindest eine Bremssystemkomponente eines Bremssystems eines Fahrzeugs; und
- Fig. 4: eine schematische Darstellung zum Erläutern einer Funktionsweise einer Ausführungsform des Prognosesystems für zumindest eine Bremssystemkomponente eines Bremssystems eines Fahrzeugs.

### Ausführungsformen der Erfindung

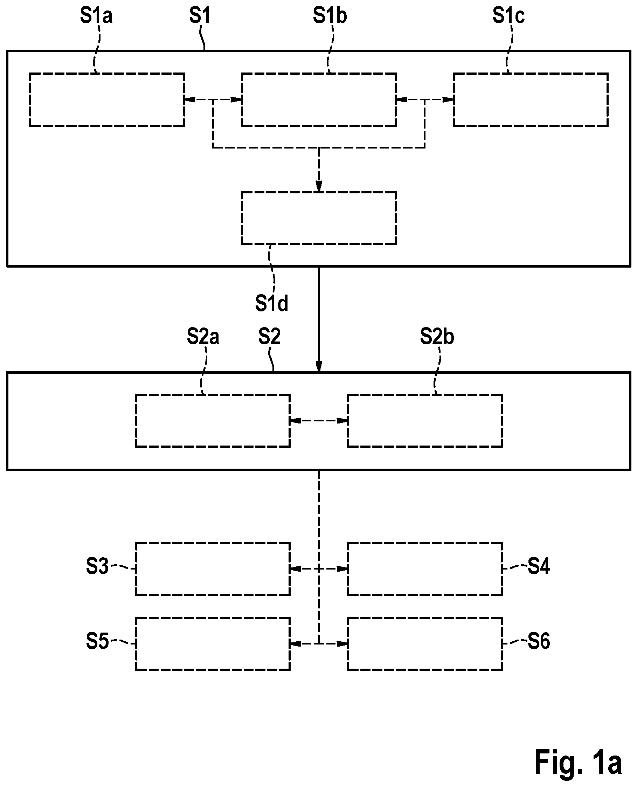

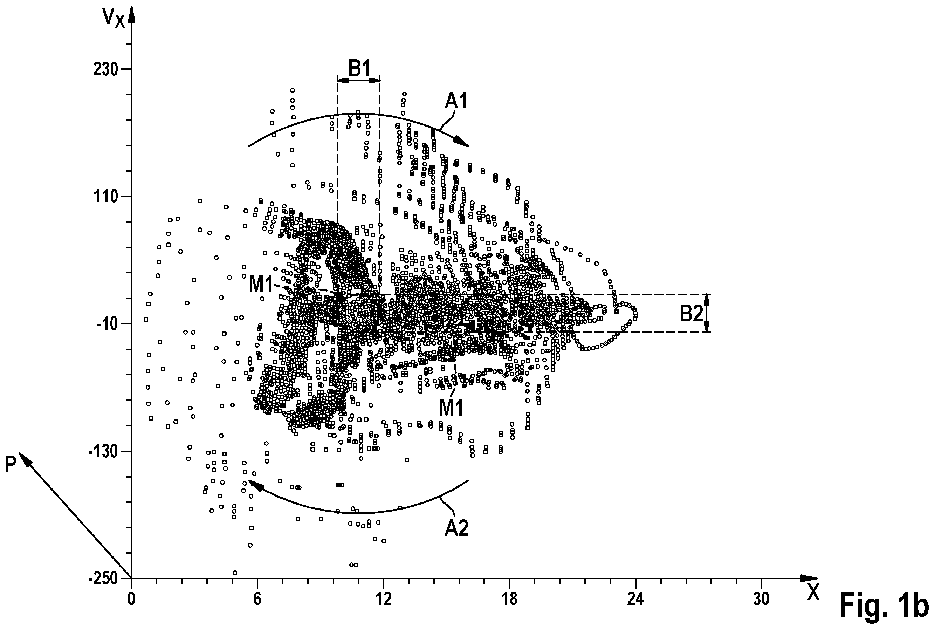

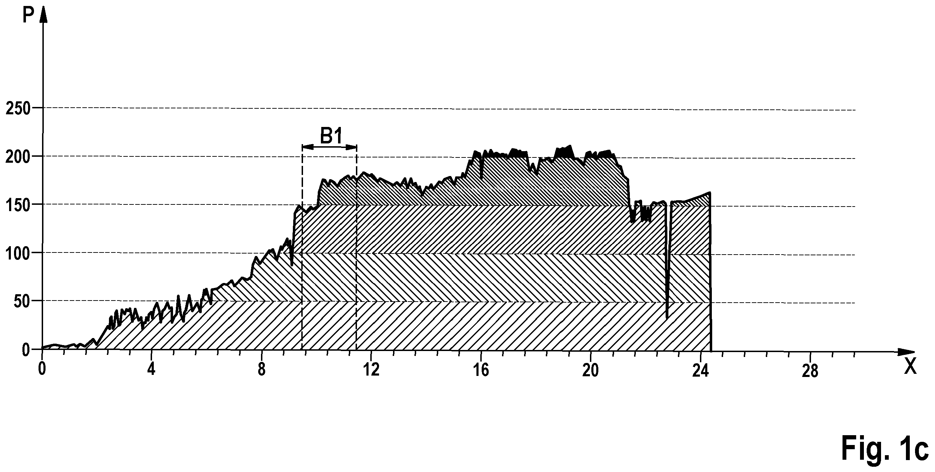

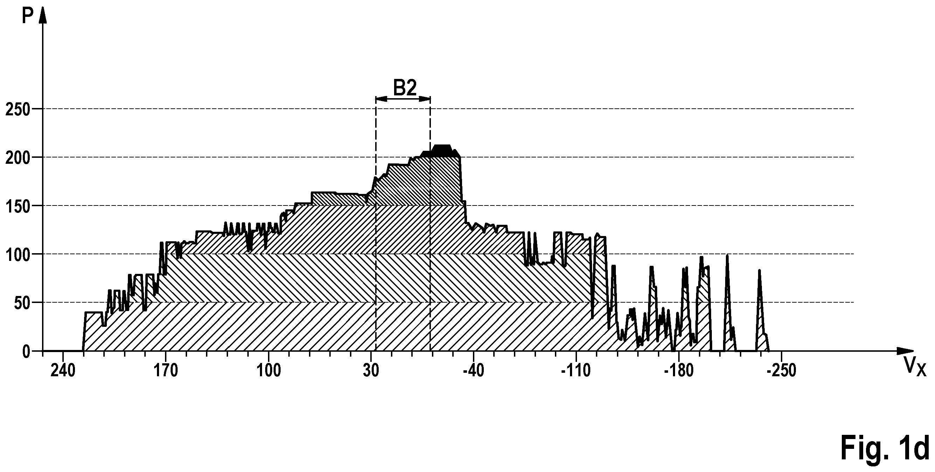

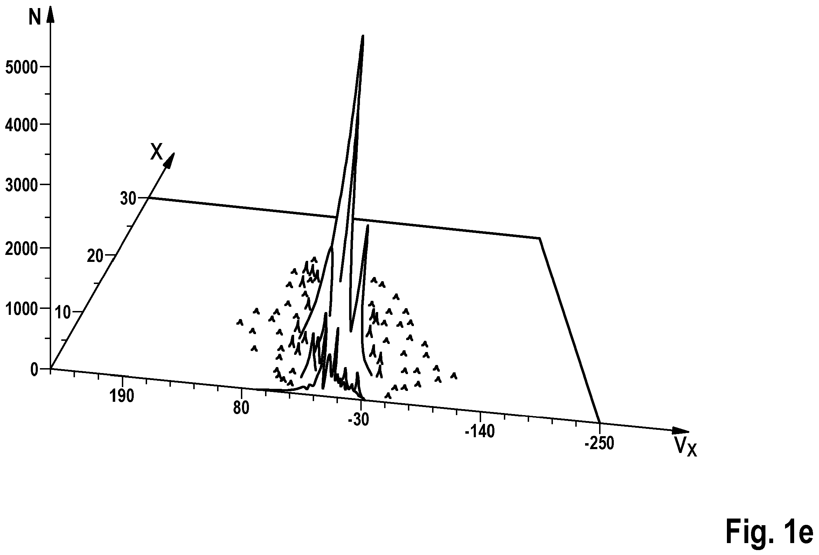

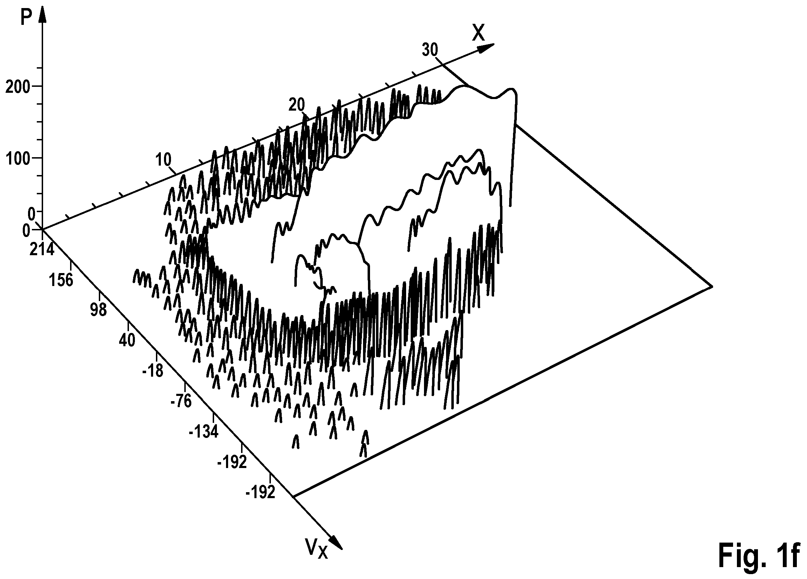

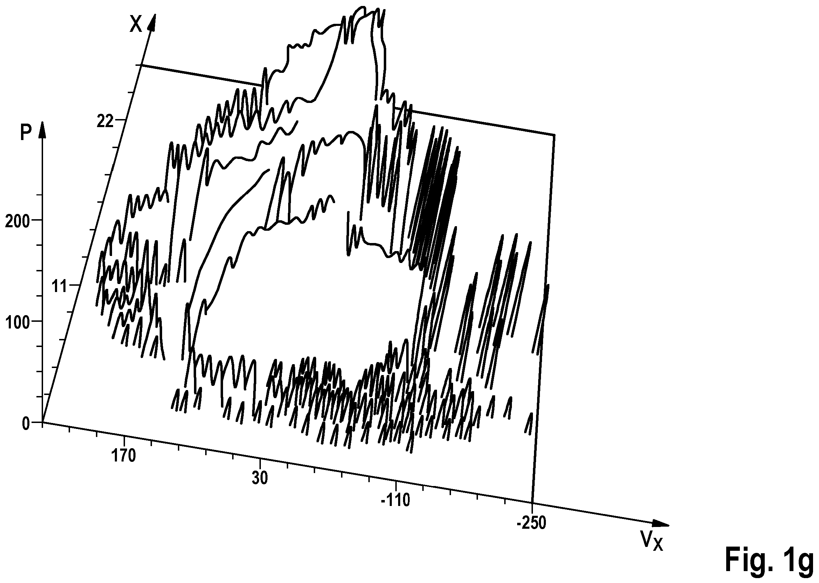

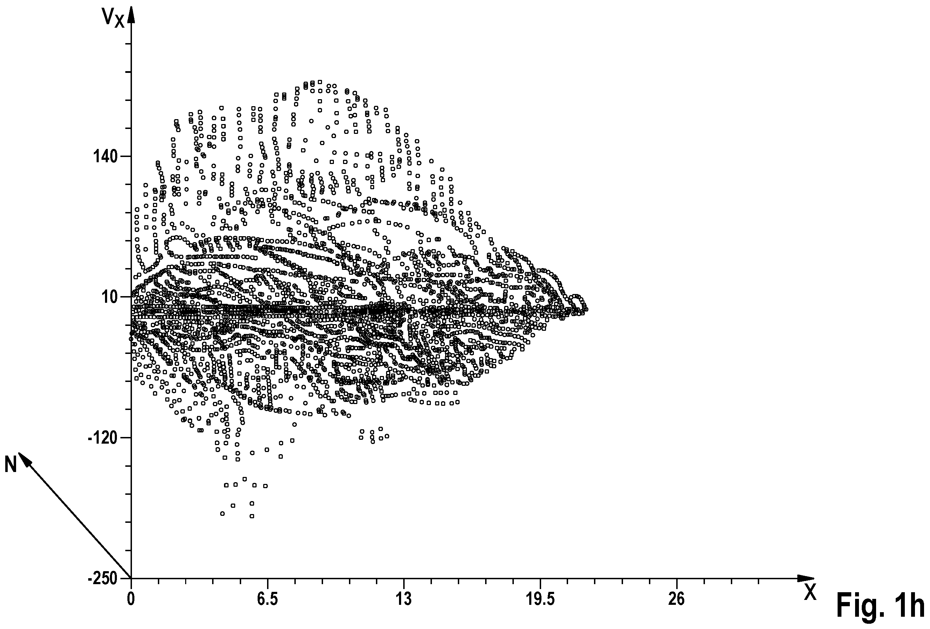

Fig. 1 a bis 1h zeigen ein Flussdiagramm und Koordinatensysteme zum Erläutern einer ersten Ausführungsform des Prognoseverfahrens für zumindest eine Bremssystemkomponente eines Bremssystems eines Fahrzeugs.

Das im Weiteren beschriebene Prognoseverfahren ist für eine Vielzahl verschiedener Typen von Bremssystemen ausführbar. Auch für ein Brake-By-Wire-Bremssystem kann das im Weiteren beschriebene Prognoseverfahren ausgeführt werden. Es wird ausdrücklich darauf hingewiesen, dass eine Ausführbarkeit des Prognoseverfahrens auch nicht auf einen speziellen Fahrzeugtyp/Kraftfahrzeugtyp des mit dem jeweiligen Bremssystem ausgestatteten Fahrzeugs/Kraftfahrzeugs beschränkt ist.

In einem Verfahrensschritt S1 des Prognoseverfahrens werden Wertegruppen von je mindestens zwei unterschiedlichen Größen x, vₓ und p während mindestens einer fahrerinduzierten und/oder autonomen Bremsung des Fahrzeugs ermittelt. Die Wertegruppen können wahlweise während einer aktiv ausgeführten Fahrdynamik-Regelung oder während eines Nichtausführens einer Fahrdynamik-Regelung ermittelt werden. Unter der Fahrdynamik-Regelung kann eine von einem Regler angeforderte Regelung, wie z.B. eine ABS-Regelung (Antiblockiersystem-Regelung), eine ESP-Regelung (Electronic Stability Control), eine TCS-Regelung (Antriebschlupf-Regelung, Traction Control System) oder eine ACC-Regelung (Abstandsregeltempomal, Adaptive Cruise Control) verstanden werden.

Es wird ausdrücklich darauf hingewiesen, dass die mindestens zwei unterschiedlichen Größen x, vₓ und p der gleichen Wertegruppe gleichzeitig ermittelt werden. Außerdem werden die in dem Verfahrensschritt S1 festgelegten Wertegruppen in einer Bremssituation ermittelt, in welcher mindestens eine der Größen x, vₓ und p außerhalb ihres jeweils vorgegebenen Normalwertebereichs liegt und/oder eine zeitliche Ableitung mindestens einer der Größen x, vₓ und p außerhalb eines der jeweiligen Größe x, vₓ und p jeweils vorgegebenen quasistatischen Bereichs liegt. Man kann dies auch damit umschreiben, dass die in dem Verfahrensschritt S1 festgelegten Wertegruppen in einer Bremssituation mit einer hohen und/oder dynamischen Last festgelegt werden.

Bei den in dem Verfahrensschritt S1 festgelegten Wertegruppen gibt mindestens eine erste Größe x und vₓ der mindestens zwei Größen x, vₓ und p jeder Wertegruppe jeweils eine Bremspedalbetätigung durch einen Fahrer des Fahrzeugs und/oder eine Bremswunschvorgabe einer Brems- oder Fahrsteuerautomatik und/oder des Reglers des Fahrzeugs wieder. Unter der mindestens einen ersten Größe x und vₓ kann insbesondere eine Größe/Einheit verstanden werden, welche eine Betätigungsstärke der Bremspedalbetätigung durch den Fahrer und/oder eine Bremsstärke der Bremswunschvorgabe der Brems- oder Fahrsteuerautomatik und/oder des Reglers anzeigt. Unter der Brems- oder Fahrsteuerautomatik kann eine Automatik zum autonomen Steuern zumindest der Geschwindigkeit des Fahrzeugs, wie z.B. ein Abstandsregeltempomat (ACC, Adaptive Cruise Control) verstanden werden. Optionaler Weise kann die Brems- oder Fahrsteuerautomatik auch eine Automatik zum Ansteuern von autonomen Bremsungen des Fahrzeugs (wie ein Notbremssystem) oder eine Automatik zum autonomen (fahrerlosen) Fahren des Fahrzeugs sein. Beispiele für den Regler sind oben schon angegeben.

Die mindestens eine erste Größe x und vₓ jeder Wertegruppe kann in einem optionalen Teilschritt S1 a des Verfahrensschritts S1 bestimmt/gemessen werden. In dem Beispiel der Fig. 1a bis 1h sind die mindestens eine erste Größe x und vₓ ein Stangenweg x einer an dem Bremspedal angebundenen Eingangsstange und eine Verstellgeschwindigkeit vₓ der Eingangsstange. Der Stangenweg x kann beispielsweise mittels eines Stangenwegsensors leicht und verlässlich detektiert werden. Aus dem Stangenweg x kann zusätzlich die Verstellgeschwindigkeit vₓ der Eingangsstange leicht abgeleitet werden. Die hier genannten Beispiele für die mindestens eine erste Größe x und vₓ sind jedoch nicht limitierend zu interpretieren. Als die mindestens eine erste Größe x und vₓ jeder Wertegruppe können z.B. auch eine von der Brems- oder Fahrsteuerautomatik und/oder dem Regler angeforderte Soll-Motorstromstärke eines Motors einer motorisierten Bremsdruckaufbauvorrichtung des Bremssystems, eine von der Brems- oder Fahrsteuerautomatik und/oder dem Regler angeforderte Soll-Betriebsspannung des Motors der motorisierten Bremsdruckaufbauvorrichtung, ein von der Brems- oder Fahrsteuerautomatik und/oder dem Regler angefordertes Soll-Motordrehmoment des Motors der motorisierten Bremsdruckaufbauvorrichtung, eine von der Brems- oder Fahrsteuerautomatik und/oder dem Regler angeforderte Soll-Leistungsaufnahme des Motors der motorisierten Bremsdruckaufbauvorrichtung, ein von der Brems- oder Fahrsteuerautomatik und/oder dem Regler angeforderter Soll-Verstellweg mindestens eines verstellbaren Kolbens der motorisierten Bremsdruckaufbauvorrichtung und/oder eine von der Brems- oder Fahrsteuerautomatik und/oder dem Regler angeforderte Soll-Pumprate mindestens einer in dem Bremssystem eingesetzten Pumpe ermittelt werden. Alle hier beschriebenen Beispiele für die mindestens eine erste Größe x und vₓ geben eine Betätigungsstärke der Bremspedalbetätigung durch den Fahrer oder eine Bremsstärke der Bremswunschvorgabe der Brems- oder Fahrsteuerautomatik und/oder des Reglers gut wieder.

Gleichzeitig mit dem Teilschritt S1a kann auch ein optionaler Teilschritt S1b des Verfahrensschritts S1 ausgeführt, in welchem mindestens eine zweite Größe p der mindestens zwei Größen x, vₓ und p jeder Wertegruppe ermittelt/gemessen wird. Unter der mindestens einen zweiten Größe p ist eine Größe/Einheit zu verstehen, welche jeweils eine Reaktion zumindest der einen Bremssystemkomponente des Bremssystems auf die Bremspedalbetätigung und/oder die Bremswunschvorgabegröße, einen Zustand an und/oder in zumindest der einen Bremssystemkomponente (während der Reaktion zumindest der einen Bremssystemkomponente des Bremssystems) und/oder eine physikalische Größe des mittels des Bremssystems abgebremsten Fahrzeugs wiedergibt. Beispielhaft wird in der hier beschriebenen Ausführungsform ein Hauptbremszylinderdruck p in einem Hauptbremszylinder des Bremssystems als die mindestens eine zweite Größe p ermittelt. Unter dem Hauptbremszylinderdruck p kann auch ein Vordruck p des Bremssystems verstanden werden. Beispielsweise kann zum Ermitteln des Hauptbremszylinderdrucks p ein Vordrucksensor des Bremssystems genutzt werden. Alternativ oder ergänzend zu dem Hauptbremszylinderdruck p kann jedoch auch mindestens ein Bremsdruck in mindestens einem Radbremszylinder des Bremssystems, eine Motorstromstärke des Motors der motorisierten Bremsdruckaufbauvorrichtung des Bremssystems, eine Betriebsspannung des Motors der motorisierten Bremsdruckaufbauvorrichtung, ein Motordrehmoment des Motors der motorisierten Bremsdruckaufbauvorrichtung, eine Leistungsaufnahme des Motors der motorisierten Bremsdruckaufbauvorrichtung, ein Verstellweg des mindestens einen verstellbaren Kolbens der motorisierten Bremsdruckaufbauvorrichtung, eine Reglerzustand-Information über eine eventuell ausgeführte Bremsdruck-Regelung oder eine eventuell ausgeführte Fahrdynamik-Regelung, mindestens eine Temperatur an und/oder in zumindest der motorisierten Bremsdruckaufbauvorrichtung, eine Pumprate der mindestens einen in dem Bremssystem eingesetzten Pumpe, ein Getriebewirkungsgrad eines an der motorisierten Bremsdruckaufbauvorrichtung angebundenen Getriebes des Bremssystems, mindestens ein Schaltzustand mindestens eines Ventils des Bremssystems, eine mittels des Bremssystems auf das Fahrzeug bewirkte Bremskraft, ein mittels des Bremssystems auf das Fahrzeug bewirktes Bremsmoment, ein Lenkwinkel des Fahrzeugs, eine Gierrate des Fahrzeugs, eine mittels des Bremssystems auf das Fahrzeug bewirkte Fahrzeugverzögerung, eine Längsgeschwindigkeit des Fahrzeugs, eine Quergeschwindigkeit des Fahrzeugs, eine Querbeschleunigung des Fahrzeugs und/oder eine Bordnetzspannung eines Bordnetzes des Fahrzeugs als die mindestens eine zweite Größe p ermittelt werden. Die hier aufgezählten Beispiele für die mindestens eine zweite Größe p sind mittels der herkömmlicherweise bereits an jedem Fahrzeugtyp eingesetzten Sensorik messbar.

Außerdem wird gleichzeitig mit den Teilschritten S1a und S1b noch ein Teilschritt S1c des Verfahrensschritts S1 jeweils ausgeführt, mittels welchem zusätzlich zu der mindestens einen ersten Größe x und vₓ und der mindestens einen zweiten Größe p für jede Wertegruppe noch mindestens eine dritte Größe ermittelt wird. Dabei wird der Teilschritt S1c derart gleichzeitig mit den Teilschritten S1a und S1b ausgeführt, dass die mindestens eine dritte Größe gleichzeitig mit der mindestens einen ersten Größe x und vₓ und der mindestens einen zweiten Größe p der gleichen Wertegruppe ermittelt wird. Unter der mindestens einen dritten Grö-βe ist eine Größe/Einheit zu verstehen, welche einen Umgebungsparameter wiedergibt. Die mindestens eine dritte Größe kann beispielsweise ein Reibwert einer gleichzeitig von dem Fahrzeug befahrenen Fahrbahn, ein Fahrbahnneigungswinkel, ein Scheibenwischerstatus und/oder eine Außentemperatur sein. Eine zum Bestimmen der hier aufgezählten Beispiele für die mindestens eine dritte Größe geeignete Sensorik ist damit herkömmlicherweise bereits an vielen Fahrzeugtypen/Kraftfahrzeugtypen vorhanden. Zum Bestimmen des Reibwerts einer gleichzeitig von dem Fahrzeug befahrenen Fahrbahn kann während des Bestimmens der anderen Größen x, vₓ und p der gleichen Wertegruppe auch eine Ortsangabe der gerade von dem Fahrzeug befahrenen Fahrbahn ermittelt und anhand der jeweiligen Ortsangabe der Reibwert der gleichzeitig von dem Fahrzeug befahrenen Fahrbahn von einer vorgegebenen Reibwertekarte ausgelesen/abgefragt werden.

Um eine schnelle Ausführbarkeit des Verfahrensschritts S1 zu gewährleisten, werden die Teilschritte S1a, S1b und S1c vorzugsweise pro Wertegruppe je einmal ausgeführt, ohne dass während des Ausführens der Teilschritte S1a bis S1c darauf geachtet wird, ob mindestens eine der ermittelten Größen x, vₓ und p außerhalb ihres jeweils vorgegebenen Normalwertebereichs liegt und/oder ob eine zeitliche Ableitung mindestens einer der ermittelten Größen x, vₓ und p außerhalb ihres jeweils vorgegebenen quasistatischen Bereichs liegt. Gegebenenfalls wird dann nach dem Ausführen der Teilschritte S1 a bis S1c noch ein Teilschritt S1d des Verfahrensschritts S1 ausgeführt, in welchem eine zuvor ermittelte Wertegruppe, bei welcher keine der ermittelten Größen außerhalb ihres jeweils vorgegebenen Normalwertebereichs liegt und/oder keine zeitliche Ableitung mindestens einer der ermittelten Größen x, vₓ und p außerhalb ihres jeweils vorgegebenen quasistatischen Bereichs liegt, von den für die weiteren Verfahrensschritte genutzten Wertegruppen herausgefiltert wird.

In einem weiteren Verfahrensschritt S2 wird anhand der ermittelten (und nicht herausgefilterten) Wertegruppen abgeschätzt, ob ein Auftreten zumindest einer Funktionsbeeinträchtigung an zumindest der einen Bremssystemkomponente des Bremssystems zumindest während eines vorgegebenen Prognosezeitintervalls wahrscheinlich ist. Der Verfahrensschritt S2 nutzt dabei aus, dass insbesondere bei einer Bremssituation mit einer hohen und/oder dynamischen Last anhand der mindestens einen gleichzeitig ermittelten Wertegruppe frühzeitig erkennbar ist, ob die zum Ausführen der jeweiligen Last mitgenutzte zumindest eine Bremssystemkomponente des Bremssystems nicht mehr der Beanspruchung vollständig standhalten kann. Das hier beschriebene Prognoseverfahren nutzt damit gezielt Wertegruppen mindestens einer Bremssituation, in welcher aufgrund der zu bewältigenden hohen und/oder dynamischen Last selbst eine nur geringfügig verringerte Funktionsfähigkeit noch am ehesten erkennbar ist, für die vorteilhafte Prognose. Zusätzlich stellt die Ausführung der Prognose unter ausschließlicher Verwendung der in dem Verfahrensschritt S1 ermittelten (und nicht herausgefilterten) Wertegruppen geringere Anforderungen an eine dazu verwendete Elektronik und an einen mitverwendeten Datenspeicher, da die Anzahl der in dem Verfahrensschritt S2 ausgewerteten Wertegruppen vergleichsweise niedrig ist.

Mittels des hier beschriebenen Prognoseverfahrens können insbesondere auch eine Gesamtfunktionalität eines elektromechanischen Bremskraftverstärkers des Bremssystems oder einer integrierten Plungervorrichtung des Bremssystems (wie speziell einer IPB, Integrated Power Brake) im Hinblick auf eine Prognose ihrer zukünftigen Einsetzbarkeit/Funktionsfähigkeit untersucht werden. Insbesondere können mittels dieser Methode auch zukünftige Ausfälle des elektromechanischen Bremskraftverstärkers oder der integrierten Plungervorrichtung vorhergesagt werden, welche mittels herkömmlicher Überwachungsmethoden und Sensoren gemäß dem Stand der Technik, wie beispielsweise mittels eines Motorlagesensors oder eines Differenzialsensors, nicht vorhersagbar sind. Das hier beschriebene Prognoseverfahren ermöglicht somit eine vorteilhafte Frühdiagnose insbesondere für den elektromechanischen Bremskraftverstärker oder die integrierte Plungervorrichtung des Bremssystems des Fahrzeugs. Es wird jedoch ausdrücklich darauf hingewiesen, dass mittels des Prognoseverfahrens auch andere Bremssystemkomponenten bezüglich einer bevorstehenden Funktionsbeeinträchtigung/ eines zukünftigen Ausfalls untersucht werden können.

Vorzugsweise werden die in dem Verfahrensschritt S1 ermittelten Wertegruppen in einem Teilschritt S2a des Verfahrensschritts S2 in ein Koordinatensystem eingetragen, welches mindestens eine die mindestens eine erste Größe x und vₓ anzeigende erste Achse und mindestens eine die mindestens eine zweite Größe p anzeigende zweite Achse aufweist. Sofern in dem Verfahrensschritt S1 Wertegruppen ermittelt werden, welche zusätzlich zu der mindestens einen ersten Größe x und vₓ und der mindestens einen zweiten Größe p noch die mindestens eine dritte Größe umfassen, kann das Koordinatensystem zusätzlich zu der mindestens einen ersten Achse und der mindestens einen zweiten Achse noch mindestens eine die mindestens eine dritte Größe anzeigende dritte Achse haben. Insbesondere kann, sofern als die mindestens eine dritte Größe je ein Reibwert der gleichzeitig von dem Fahrzeug befahrenen Fahrbahn pro Wertegruppe in dem Verfahrensschritt S1/S1c ermittelt wird, das Koordinatensystem anstelle einer den Reibwert anzeigenden Reibwert-Achse auch den Reibwert anzeigende Sektoren in einer von der oder einer der ersten Achse und der oder einer der zweiten Achse aufgespannten Ebene aufweisen.

Beispiele für derartige Koordinatensysteme sind in den Fig. 1b bis 1h bildlich wiedergegeben, wobei die Achsen der Koordinatensysteme der Fig. 1b bis 1h den Stangenweg x der Eingangsstange (in mm/Millimeter), die Verstellgeschwindigkeit vₓ der Eingangsstange (in mm/s, d.h. in Millimeter pro Sekunde), den Hauptbremszylinderdruck p (in bar) und eine Häufigkeit N anzeigen. Die Koordinatensysteme der Fig. 1b bis 1e geben eine Bremssituation wieder, in welcher, wie mittels eines Pfeils A1 bildlich wiedergegeben, von einem Teilbremsen plötzlich zu einer ABS-Regelung gewechselt wird, wobei sprunghaft ein Wechsel zwischen einem niedrigen Reibwert der befahrenen Fahrbahn (markiert mit einer Markierung M1) und einem hohen Reibwert der befahrenen Fahrbahn (markiert mit einer Markierung M2) auftritt. Die Bremssituation weist damit eine hohe Dynamik auf, bis wieder das Teilbremen fortgesetzt werden kann, wie mittels eines Pfeils A2 bildlich wiedergegeben ist. Die Bremssituation eignet sich damit gut für die Prognostizierung, ob ein Auftreten zumindest einer Funktionsbeeinträchtigung an zumindest der einen Bremssystemkomponente des Bremssystems zumindest während des vorgegebenen Prognosezeitintervalls mit einer hohen Wahrscheinlichkeit bevorsteht. Wie mittels der in die Koordinatensysteme der Fig. 1b bis 1d eingezeichneten Bereiche B1 und B2 bildlich angezeigt ist, können gezielt die Wertegruppen ausgewählt werden, welche eine wenn auch nur geringfügig verringerte Funktionsfähigkeit zumindest der einen Bremssystemkomponente des Bremssystems am ehesten anzeigen. Ein zur Auswertung dieser Wertegruppen benötigter Speicherbedarf und ein dazu aufzubringender Arbeitsaufwand sind somit gering. Durch ein Finden eines "Worst-Case-Manövers" hinsichtlich der auf zumindest die eine Bremssystemkomponente des Bremssystems wirkenden Belastung kann die Prognose somit nicht nur in ihrer Qualität verbessert werden, sondern auch der zum Ausführen der Prognose benötigte Arbeits- und Speicheraufwand signifikant reduziert werden.

In einem weiteren optionalen Teilschritt S2b des Verfahrensschritts S2 können den in das Koordinatensystem eingetragenen Wertegruppen jeweils Bremsenbetriebspunkte zugeordnet werden. (Der besseren Übersichtlichkeit wegen sind jedoch keine Bremsenbetriebspunkte in die Koordinatensysteme der Fig. 1b bis 1h eingezeichnet.) Anschließend kann unter zusätzlicher Berücksichtigung der Verteilung der Bremsenbetriebspunkte abgeschätzt werden, ob ein Auftreten zumindest einer Funktionsbeeinträchtigung an zumindest der einen Bremssystemkomponente des Bremssystems zumindest während des vorgegebenen Prognosezeitintervalls wahrscheinlich ist. Es wird ausdrücklich darauf hingewiesen, dass jedem Gesamtsystemzustand, insbesondere abhängig von Umweltdaten, Fahrbahndaten und/oder Verkehrssituationsdaten, jeweils ein Bremsenbetriebspunkt zugeordnet werden kann. Weicht nun die Lage des jeweiligen Bremsenbetriebspunkts in dem jeweiligen Koordinatensystem von einer für den bestimmten Bremsenbetrieb vorgegebenen Soll-Lage ab, so deutet dies auf eine abnehmende Funktionsfähigkeit zumindest der einen Bremsenkomponente des Bremssystems hin. Übergänge von einem ersten Bremsenbetriebspunkt zu einem zweiten Bremsenbetriebspunkt, beispielsweise indem der Fahrer beim Übergang von einer trockenen Straße auf Schnee bremst, können ebenfalls erfasst und entsprechend ausgewertet werden. Die zusätzliche Auswertung der Bremsenbetriebspunkte ermöglicht somit eine transiente und hochdynamische Frühdiagnose für das jeweilige Bremssystem. Der Teilschritt S2b bietet außerdem ein "lernendes Modell", in dem neue (d.h. bisher nicht bekannte) Bremsenbetriebspunkte erfasst und in einem Bremsenkennfeld einschließlich Zustandsübergängen abgelegt werden können. Diese neuen Bremsenbetriebspunkte können dann im Systemverbund auf Anomalien hin bewertet werden. Das jeweils zur Prognose/Frühdiagnose eingesetzte Bremsenkennfeld kann weg-, positions-, geschwindigkeits- und/oder energiebezogen sein.

Das hier beschriebene Prognoseverfahren ist somit eine sehr sensitive Möglichkeit zum frühzeitigen Erkennen von Fehlern oder Funktionsbeeinträchtigungen an dem jeweiligen Bremssystem. Vorteilhafterweise lässt sich anhand des jeweils erstellten Koordinatensystems verlässlich prognostizieren, ob eine noch funktionsfähige Bremssystemkomponente des Bremssystems in naher Zukunft bestenfalls eine eingeschränkte Funktionsfähigkeit aufweisen wird. Insbesondere "beginnende Fehler" an dem Bremssystem können anhand des jeweils erstellten Koordinatensystems erkannt/prognostiziert werden. Vor allem in einer Bremssituation mit einer hohen und/oder dynamischen Last lässt sich ein Verschleiß zumindest der einen Bremssystemkomponente des Bremssystems, welcher sind in einem veränderte Reibungsverhalten mindestens einer ihrer Komponenten äußert, aus einem zur Erfüllung des Bremswunsches des Fahrers, der Brems- oder Fahrsteuerautomatik und/oder des Reglers notwendigen, jedoch von der Modellvorhersage abweichenden Energieverbrauch ableiten. Auch schleichende Alterungen an zumindest der einen Bremssystemkomponente des Bremssystems können durch regelmäßiges Abspeichern von Daten, z.B. in Abhängigkeit vom Kilometerstand, erkannt werden. Durch regelmäßige Abspeicherung der erstellten Koordinatensysteme, z.B. in Abhängigkeit vom Kilometerstand, können zusätzlich Referenzdaten für eine spätere Frühdiagnose sichergestellt werden. Ergänzend kann auch das Fahrverhalten des Fahrers bei der Prognose mitberücksichtigt werden. Die dazu auszuführenden Verfahrensschritte S1 und S2 sind dennoch mittels einer vergleichsweise kostengünstigen und relativ kleinvolumigen Elektronik ausführbar.

Insbesondere sofern in dem Verfahrensschritt S2 prognostiziert/vorhergesagt wird, dass ein Auftreten zumindest einer Funktionsbeeinträchtigung an zumindest der einen Bremssystemkomponente des Bremssystems während des Prognosezeitintervalls wahrscheinlich ist, kann als optionaler Verfahrensschritt S3 eine entsprechende Warnung mittels einer Leuchtanzeige, mittels eine Tonausgabe und/oder mittels einer Bildanzeige an den Fahrer des Fahrzeugs übermittelt werden. Zum Übermitteln der Warnung können mindesten ein Leuchtelement des Fahrzeugs, eine Tonausgabeeinrichtung des Fahrzeugs, eine Bildanzeigeeinrichtung des Fahrzeugs und/oder ein Mobilgerät des Fahrers, wie insbesondere sein Mobiltelefon, eingesetzt werden. Der Fahrer kann somit auf vielfältige Weise dazu aufgefordert werden, eine Werkstatt aufzusuchen. Alternative oder ergänzend kann in dem Verfahrensschritt S3 auch eine der Prognose entsprechende Serviceinformation an die Werkstatt gesendet werden.

Sofern jedoch in dem Verfahrensschritt S2 prognostiziert/vorhergesagt wird, dass während des Prognosezeitintervalls kein Auftreten zumindest einer Funktionsbeeinträchtigung an zumindest der einen Bremssystemkomponente des Bremssystems zu befürchten ist, kann als optionaler Verfahrensschritt S4 auch ein Freigabekriterium für ein autonomes Fahren des Fahrzeugs ausgegeben werden. Entsprechend kann, sofern in dem Verfahrensschritt S2 prognostiziert/vorhergesagt wird, dass ein Auftreten zumindest einer Funktionsbeeinträchtigung an zumindest der einen Bremssystemkomponente des Bremssystems während des Prognosezeitintervalls wahrscheinlich ist, das Freigabekriterium für ein autonomes Fahren des Fahrzeugs deaktiviert werden. Vorzugsweise ist in diesem Fall die zum autonomen Fahren des Fahrzeugs verwendete Automatik derart ausgebildet, dass die Automatik nur bei Vorliegen des Freigabekriteriums in einem zum autonomen Fahren des Fahrzeugs geeigneten Betriebsmodus geschaltet ist. Auf diese Weise ist sichergestellt, dass das Fahrzeug nur dann in eine autonome Fahrt versetzt wird, wenn eine Funktionsbeeinträchtigung an seinem Bremssystem für zumindest die wahrscheinliche Dauer der autonomen Fahrt mit einer hohen Wahrscheinlichkeit ausgeschlossen werden kann.

In einem anderen optionalen Verfahrensschritt S5 kann nach dem Erkennen, dass ein Auftreten zumindest einer Funktionsbeeinträchtigung an zumindest der einen Bremssystemkomponente des Bremssystems zumindest während des vorgegebenen Prognosezeitintervalls wahrscheinlich ist, auch eine Fahrtroute des Fahrzeugs auf eine lastminimierte neue Route festgelegt werden. Ebenso kann eine Fahrtweise des Fahrzeugs entsprechend angepasst werden, dass während einer Weiterfahrt des Fahrzeugs eine Lastminimierung, z.B. durch Degradierung von Funktionen und/oder Anpassung von Parametrierungen, erreicht ist, durch welche zumindest die eine Bremssystemkomponente des Bremssystems während der Weiterfahrt des Fahrzeugs besser geschont wird. Auf diese Weise kann der Zeitpunkt, zu welchem zumindest die Funktionsbeeinträchtigung an zumindest der einen Bremssystemkomponente tatsächlich auftritt, noch zumindest etwas hinausgezögert werden.

Des Weiteren kann als optionaler Verfahrensschritt S6 auch nach dem Erkennen, dass ein Auftreten zumindest einer Funktionsbeeinträchtigung an zumindest der einen Bremssystemkomponente des Bremssystems zumindest während des vorgegebenen Prognosezeitintervalls wahrscheinlich ist, das Fahrzeug in seinem Stillstand überführt werden. Insbesondere nach einem Erkennen einer kritischen Anomalie an zumindest der einen Bremssystemkomponente des Bremssystems kann ein Fahrzeugstopp des Fahrzeugs erzwungen werden. Dies Verbessert einen Sicherheitsstandard des Fahrzeugs.

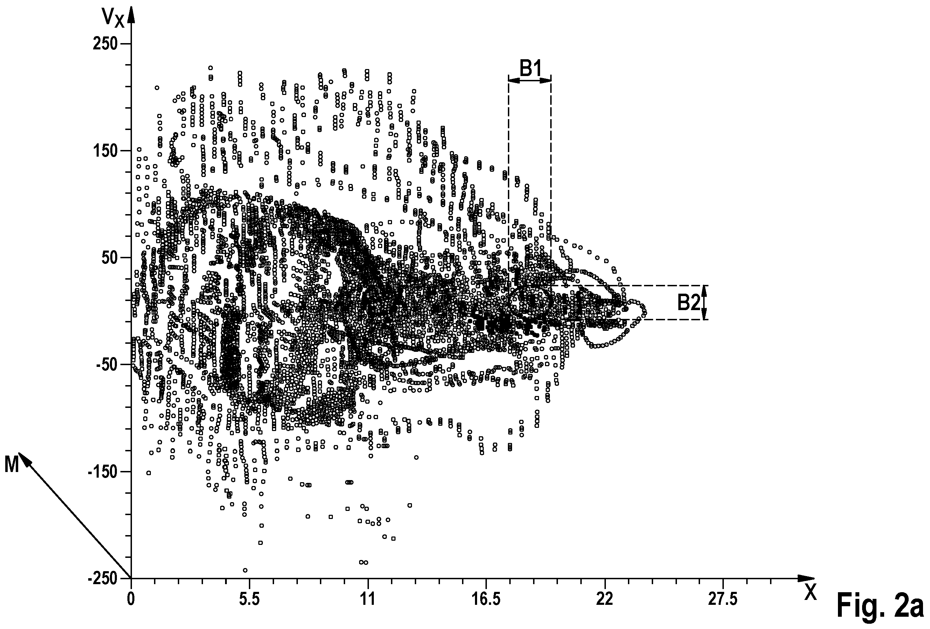

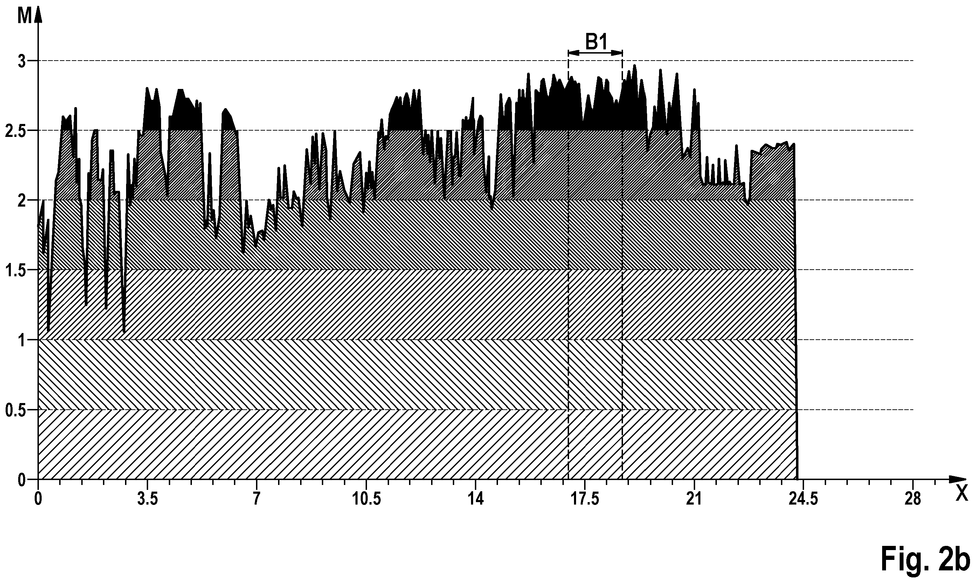

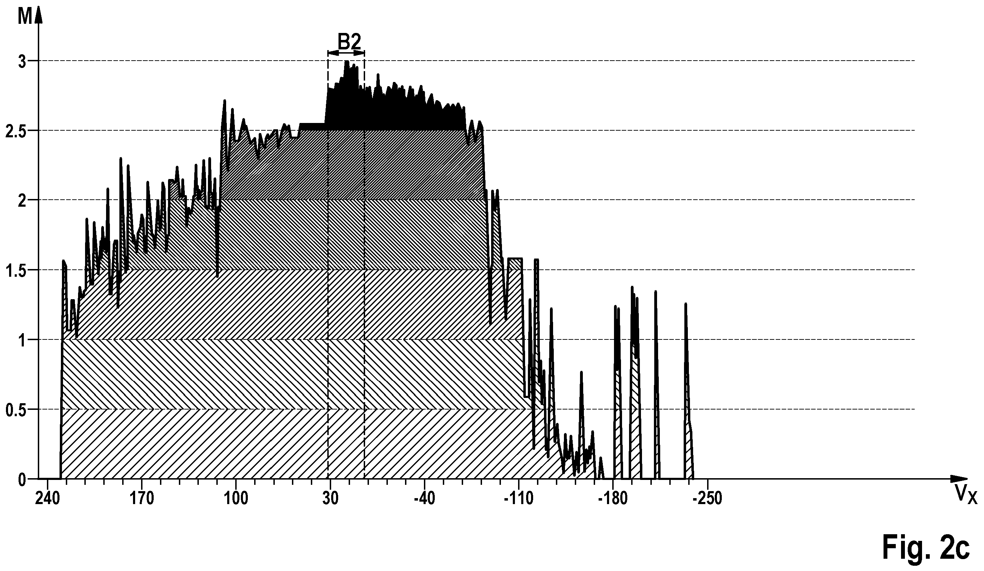

Fig. 2a bis 2c zeigen Koordinatensysteme zum Erläutern einer zweiten Ausführungsform des Prognoseverfahrens für zumindest eine Bremssystemkomponente eines Bremssystems eines Fahrzeugs.

Das mittels der Koordinatensysteme der Fig. 2a bis 2c wiedergegebene Prognoseverfahren unterscheidet sich von der zuvor beschriebenen Ausführungsform lediglich darin, dass als die mindestens eine zweite Größe M ein mittels des Bremssystems auf das Fahrzeug bewirktes Bremsmoment M (in Nm, d.h. in Newtonmeter) zusammen mit dem Stangenweg x der Eingangsstange (in mm/Millimeter) und der Verstellgeschwindigkeit vₓ der Eingangsstange (in mm/s, d.h. in Millimeter pro Sekunde) bestimmt und auf die oben bereits erläuterte Weise ausgewertet wird.

Wie mittels der in die Koordinatensysteme der Fig. 2a bis 2c eingezeichneten Bereiche B1 und B2 bildlich angezeigt ist, können auch in diesem Fall gezielt die Wertegruppen ausgewählt werden, welche eine wenn auch nur geringfügig verringerte Funktionsfähigkeit zumindest der einen Bremssystemkomponente des Bremssystems am ehesten anzeigen.

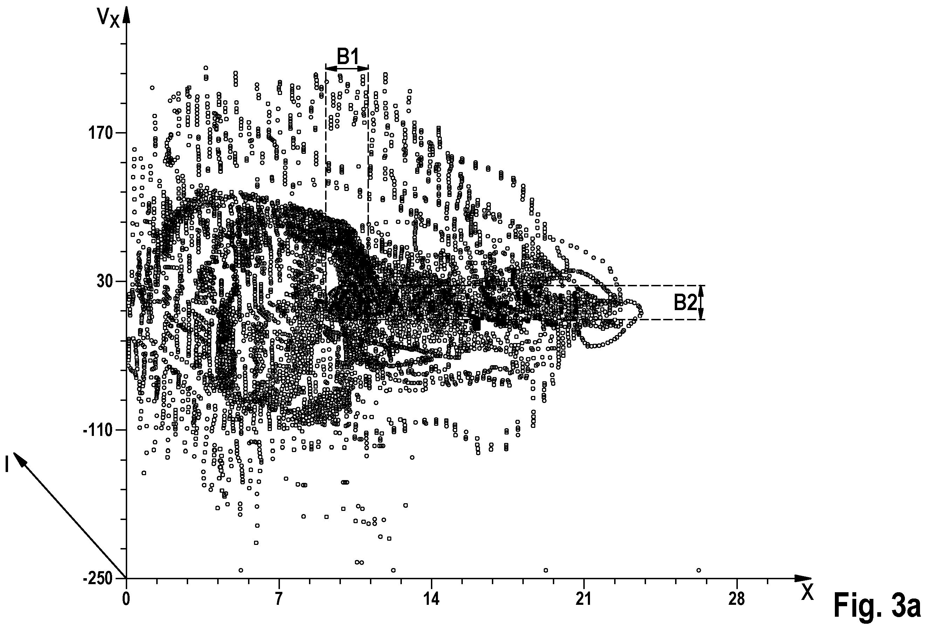

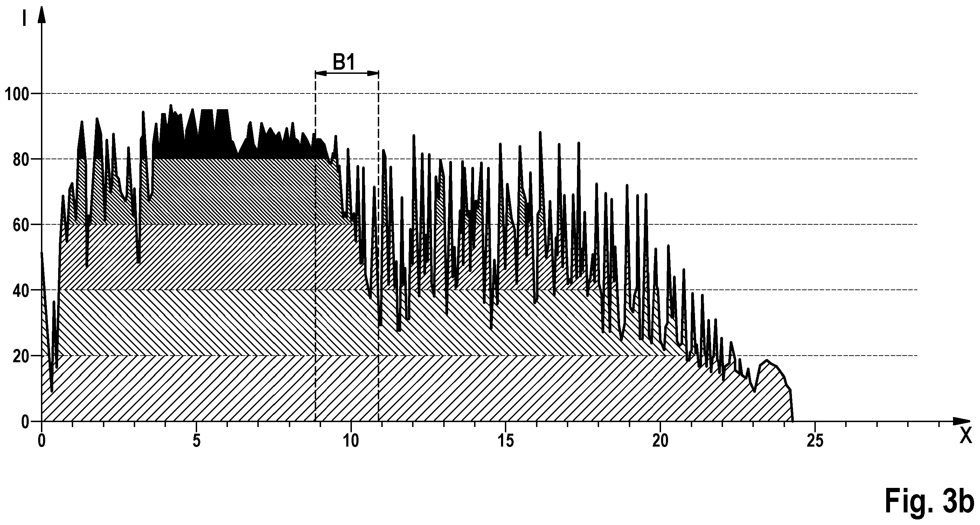

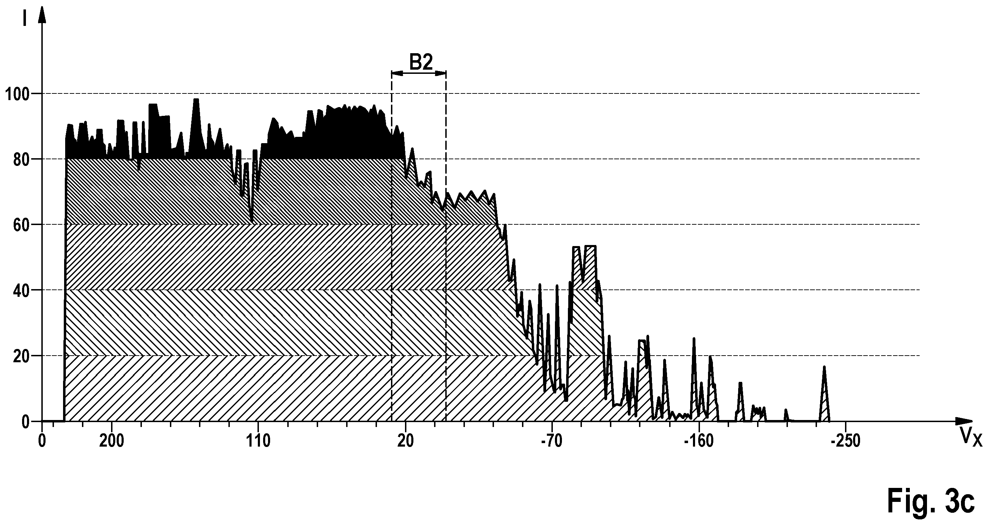

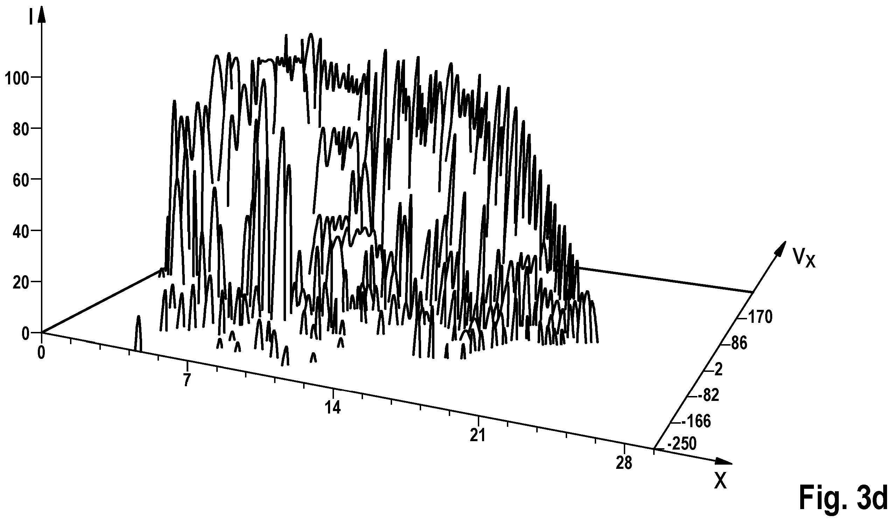

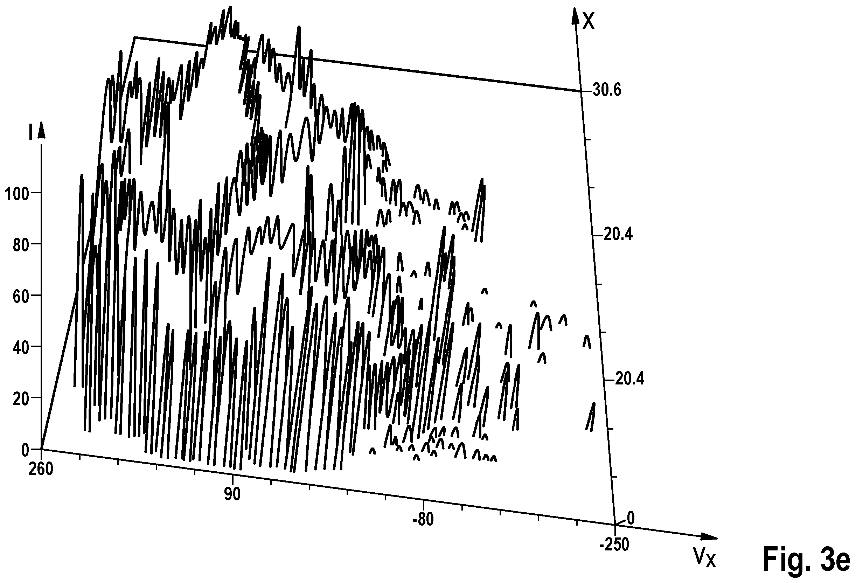

Fig. 3a bis 3e zeigen Koordinatensysteme zum Erläutern einer dritten Ausführungsform des Prognoseverfahrens für zumindest eine Bremssystemkomponente eines Bremssystems eines Fahrzeugs.

Im Unterschied zu den zuvor beschriebenen Ausführungsformen wird bei dem mittels der Fig. 3a bis 3e wiedergegebenen Prognoseverfahren als die mindestens eine zweite Größe I eine Motorstromstärke I eines Motors des Bremssystems (in A/Ampere) zusammen mit dem Stangenweg x der Eingangsstange (in mm/Millimeter) und der Verstellgeschwindigkeit vₓ der Eingangsstange (in mm/s, d.h. in Millimeter pro Sekunde) bestimmt und auf die oben bereits erläuterte Weise ausgewertet. Auch bei dieser Ausführungsform ist es möglich, gezielt die Wertegruppen auszuwählen, welche eine wenn auch nur geringfügig verringerte Funktionsfähigkeit zumindest der einen Bremssystemkomponente des Bremssystems am ehesten anzeigen, wie mittels der eingezeichneten Bereiche B1 und B2 erneut angezeigt ist.

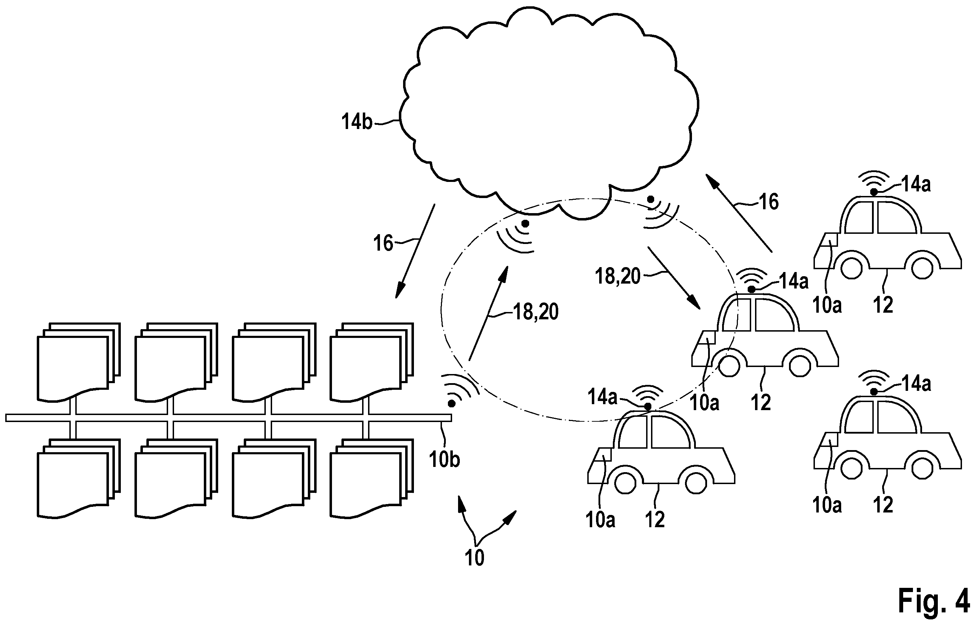

Fig. 4 zeigt eine schematische Darstellung zum Erläutern einer Funktionsweise einer Ausführungsform des Prognosesystems für zumindest eine Bremssystemkomponente eines Bremssystems eines Fahrzeugs.

Das im Weiteren beschriebene Prognosesystem 10 ist zur Prognose, insbesondere zur Frühdiagnose, für zumindest eine Bremssystemkomponente eines Bremssystems eines Fahrzeugs 12 nutzbar. Eine Verwendbarkeit des im Weiteren beschriebenen Prognosesystems 10 ist weder auf einen besonderen Bremssystemtyp des jeweiligen Bremssystems noch auf einen speziellen Fahrzeugtyp/Kraftfahrzeugtyp des mit dem jeweiligen Bremssystem ausgestatteten Fahrzeugs/Kraftfahrzeugs 12 beschränkt.

Das Prognosesystem 10 umfasst eine erste Elektronikeinrichtung 10a, welche dazu ausgelegt und/oder programmiert ist, während mindestens einer fahrerinduzierten und/oder autonomen Bremsung Wertegruppen von je mindestens zwei unterschiedlichen Größen zu ermitteln. Außerdem sind/werden mittels der ersten Elektronikeinrichtung die mindestens zwei Größen der gleichen Wertegruppe gleichzeitig ermittelbar/ermittelt. Ebenso sind/werden die mindestens zwei Grö-ßen für jede Wertegruppe in einer Bremssituation ermittelbar/ermittelt, in welcher mindestens eine der Größen außerhalb ihres jeweils vorgegebenen Normalwertebereichs liegt und/oder eine zeitliche Ableitung mindestens einer der Größen außerhalb eines der jeweiligen Größe jeweils vorgegebenen quasistatischen Bereichs liegt. Die Wertegruppen werden somit alle in mindestens einer Bremssituation mit einer hohen und/oder dynamischen Last bestimmt.

Mindestens eine erste Größe der mindestens zwei Größen gibt jeweils eine Bremspedalbetätigung durch einen Fahrer des Fahrzeugs und/oder eine Bremswunschvorgabe einer Brems- oder Fahrsteuerautomatik und/oder eines Reglers des Fahrzeugs wieder, während mindestens eine zweite Größe der mindestens zwei Größen jeweils eine Reaktion zumindest der einen Bremssystemkomponente des Bremssystems auf die Bremspedalbetätigung und/oder die Bremswunschvorgabegröße, einen Zustand an und/oder in zumindest der einen Bremssystemkomponente und/oder eine physikalische Größe des mittels des Bremssystems abgebremsten Fahrzeugs wiedergibt. Außerdem ist die erste Elektronikeinrichtung dazu ausgelegt und/oder programmiert, Wertegruppen zu ermitteln, welche zusätzlich zu der mindestens einen ersten Größe und der mindestens einen zweiten Größe noch mindestens eine dritte Größe umfassen, wobei die mindestens eine dritte Größe gleichzeitig mit der mindestens einen ersten Größe und der mindestens einen zweiten Größe der gleichen Wertegruppe ermittelt ist und einen Umgebungsparameter wiedergibt. Der Umgebungsparameter kann insbesondere ein Reibwert einer gleichzeitig von dem Fahrzeug 12 befahrenen Fahrbahn sein. Weitere Beispiele für die mindestens eine erste Größe, die mindestens eine zweite Größe und die mindestens eine dritte Größe sind oben schon aufgezählt.

Außerdem sind die erste Elektronikeinrichtung 10a und/oder eine zweite Elektronikeinrichtung 10b des Prognosesystems 10 dazu ausgelegt und/oder programmiert, anhand der ermittelten Wertegruppen abzuschätzen, ob ein Auftreten zumindest einer Funktionsbeeinträchtigung an zumindest der einen Bremssystemkomponente des Bremssystems zumindest während eines vorgegebenen Prognosezeitintervalls wahrscheinlich ist. Damit schafft auch das hier beschriebene Prognosesystem 10 die oben schon erläuterten Vorteile.

Insbesondere können die erste Elektronikeinrichtung 10a und/oder die zweite Elektronikeinrichtung 10b dazu ausgelegt und/oder programmiert sein, die Wertegruppen in ein Koordinatensystem einzutragen mit mindestens einer die mindestens eine erste Größe anzeigenden ersten Achse und mindestens einer die mindestens eine zweite Größe anzeigenden zweiten Achse. Das Koordinatensystem kann zusätzlich zu der mindestens einen ersten Achse und der mindestens einen zweiten Achse noch mindestens eine die mindestens eine dritte Grö-ße anzeigende dritte Achse umfassen. Insbesondere kann das Koordinatensystem eine den Reibwert anzeigende Reibwert-Achse oder den Reibwert anzeigende Sektoren in einer von der oder einer der ersten Achsen und der oder einer der zweiten Achsen aufgespannten Ebene aufweisen. Als vorteilhafte Weiterbildung können die erste Elektronikeinrichtung 10a und/oder die zweite Elektronikeinrichtung 10b zusätzlich dazu ausgelegt und/oder programmiert sein, den in das Koordinatensystem eingetragenen Wertegruppen jeweils Bremsenbetriebspunkte zuzuordnen und unter zusätzlicher Berücksichtigung der Verteilung der Bremsenbetriebspunkte abzuschätzen, ob ein Auftreten zumindest einer Funktionsbeeinträchtigung an zumindest der einen Bremssystemkomponente des Bremssystems zumindest während des vorgegebenen Prognosezeitintervalls wahrscheinlich ist. Das Prognosesystem 10, d.h. seine erste Elektronikeinrichtung 10a und/oder seine zweite Elektronikeinrichtung 10b, können insbesondere zum Ausführen der oben erläuterten Verfahrensschritte ausgelegt/programmiert sein.

In dem Beispiel der Fig. 4 ist die erste Elektronikeinrichtung 10a an dem jeweiligen Fahrzeug 12 montierbar/montiert. Außerdem ist die erste Elektronikeinrichtung 10a dazu ausgelegt/programmiert, eine erste Kommunikationseinrichtung 14a der ersten Elektronikeinrichtung 10a oder des mit der ersten Elektronikeinrichtung 10a ausgestatteten Fahrzeugs dazu anzusteuern, Daten 16 umfassend die ermittelten Wertegruppen und/oder mindestens ein Koordinatensystem mit den ermittelten Wertegruppen an eine zweite Kommunikationseinrichtung 14b der getrennt von dem Fahrzeug 12 vorliegenden zweiten Elektronikeinrichtung 10b zu übermitteln. Die zweite Kommunikationseinrichtung 14b ist dann dazu ausgelegt, die von der ersten Kommunikationseinrichtung 14a übermittelten Daten 16 zu empfangen. Ergänzend können über die Kommunikationseinrichtungen 14a und 14b auch auf der zweiten Elektronikeinrichtung 10b abgespeicherte Informationen, wie z.B. eine Reibwertekarte und/oder eine Wetterinformation, an die erste Elektronikeinrichtung 10a bereitstellbar sein.

Die erste Elektronikeinrichtung 10a kann auch zum Erstellen einer Vorab-Prognose ausgelegt/programmiert sein und, insbesondere sofern unbekannte oder verdächtige Betriebspunkte in dem erstellten Koordinatensystem vorliegen, die Daten 16 mit der Vorab-Prognose an die zweite Elektronikeinrichtung 10b übermitteln. Die zweite Elektronikeinrichtung 10b erstellt nach Empfangen der Daten 16 mit zumindest den ermittelten Wertegruppen auf die oben schon erläuterte Weise die Prognose/Frühdiagnose für zumindest die eine Bremssystemkomponente des Bremssystems. Dazu können Fahrzeugmodelle, Kennfelder und/oder Informationen über Worst-Case-Manöver und ihre Folgen auf der zweiten Elektronikeinrichtung 10b abgespeichert sein.

Eine von der zweiten Elektronikeinrichtung 10b bestimmte Prognose-Information 18 kann dann wieder über die Kommunikationseinrichtungen 14a und 14b an das Fahrzeug 12 ausgesendet werden. Die Prognose-Information 18 kann insbesondere Befehle 20 umfassen, welche dann am Fahrzeug 12 mindestens einen der oben schon erläuterten Verfahrensschritte S3 bis S6 auslösen.

Die zweiten Elektronikeinrichtung 10b kann somit auch bei einer relativ großen Distanz zwischen ihr und dem Fahrzeug 12 noch die vorteilhafte Prognose/Frühdiagnose ausführen. Das Zusammenwirken der zweiten Elektronikeinrichtung 10b mit dem Fahrzeug 12 steigert somit weder das Gewicht des Fahrzeugs 12, noch wird ein an dem Fahrzeug 12 zur Verfügung stehender Bauraum für die zweite Elektronikeinrichtung 10b benötigt. Dies ermöglicht auch eine vergleichsweise großvolumige und/oder relativ schwere Ausbildung der zweiten Elektronikeinrichtung 10b, ohne dass dies die Einsetzbarkeit des Prognosesystems 10/seiner zweiten Elektronikeinrichtung 10b beeinträchtig. Außerdem ist das Zusammenwirken der zweiten Elektronikeinrichtung 10b mit dem Fahrzeug 12 in diesem Fall auch ohne eine Steigerung der Herstellungskosten für das Fahrzeug 12 möglich.

Wie in Fig. 4 bildlich dargestellt ist, kann die mit der zweiten Kommunikationseinrichtung 14b ausgestattete zweite Elektronikeinrichtung 10b auch mit mehreren Fahrzeugen 12 zum Ausführen der Prognose/Frühdiagnose zusammenwirken. Da Fahrzeuge 12 in der Regel mit einer eigenen Kommunikationseinrichtung 14a ausgestattet sind, ist die zweite Elektronikeinrichtung 10b somit vielfach verwendbar. Optionaler Weise kann auf diese Weise auch eine Frühdiagnose "in 2 Ebenen" ausgeführt werden, indem zunächst die Prognose auf Fahrzeugebene erstellt wird und abschließend "in der höheren Ebene" der Cloud über eine Fahrzeugflotte aus mehreren/vielen Fahrzeugen 12 korreliert wird. Das Prognosesystem 10/seine zweite Elektronikeinrichtung 10b kann als vorteilhaft Weiterbildung zusätzlich noch dazu ausgelegt/programmiert sein, Textsequenzen zur Verifikation der Prognose an das jeweilige Fahrzeugs 12 zu senden, bevorzugter Weise Testsequenzen, deren Ausführung am Fahrzeug 12 weder dessen Fahrverhalten noch einen Komfort für dessen Fahrer beeinflussen.

## Patentansprüche

1. Prognosesystem (10) für zumindest eine Bremssystemkomponente eines Bremssystems eines Fahrzeugs (12) mit:
einer ersten Elektronikeinrichtung (10a), welche dazu ausgelegt und/oder programmiert ist, während mindestens einer fahrerinduzierten und/oder autonomen Bremsung des Fahrzeugs (12) Wertegruppen von je mindestens zwei unterschiedlichen Größen (x, vₓ, p, M und I) zu ermitteln, wobei mittels der ersten Elektronikeinrichtung (10a) die mindestens zwei Größen (x, vₓ, p, M und I) der gleichen Wertegruppe gleichzeitig und in einer Bremssituation ermittelbar sind, in welcher mindestens eine der Größen (x, vₓ, p, M und I) außerhalb ihres jeweils vorgegebenen Normalwertebereichs liegt und/oder eine zeitliche Ableitung mindestens einer der Größen (x, vₓ, p, M und I) außerhalb eines der jeweiligen Größe (x, vₓ, p, M und I) jeweils vorgegebenen quasistatischen Bereichs liegt, und wobei mindestens eine erste Größe (x und vₓ) der mindestens zwei Größen (x, vₓ, p, M und I) jeweils eine Bremspedalbetätigung durch einen Fahrer des Fahrzeugs (12) und/oder eine Bremswunschvorgabe einer Brems- oder Fahrsteuerautomatik und/oder eines Reglers des Fahrzeugs (12) wiedergibt und mindestens eine zweite Größe (p, M und I) der mindestens zwei Größen (x, vₓ, p, M und I) jeweils eine Reaktion zumindest der einen Bremssystemkomponente des Bremssystems auf die Bremspedalbetätigung und/oder die Bremswunschvorgabegröße, einen Zustand an und/oder in zumindest der einen Bremssystemkomponente und/oder eine physikalische Größe (M) des mittels des Bremssystems abgebremsten Fahrzeugs (12) wiedergibt;
wobei die erste Elektronikeinrichtung (10a) und/oder eine zweite Elektronikeinrichtung (10b) des Prognosesystems (10) dazu ausgelegt und/oder programmiert sind, anhand der ermittelten Wertegruppen abzuschätzen, ob ein Auftreten zumindest einer Funktionsbeeinträchtigung an zumindest der einen Bremssystemkomponente des Bremssystems zumindest während eines vorgegebenen Prognosezeitintervalls wahrscheinlich ist;
**dadurch gekennzeichnet, dass**
die erste Elektronikeinrichtung (10a) zusätzlich dazu ausgelegt und/oder programmiert ist, Wertegruppen zu ermitteln, welche zusätzlich zu der mindestens einen ersten Größe (x und vₓ) und der mindestens einen zweiten Größe (p, M und I) noch mindestens eine dritte Größe umfassen, wobei die mindestens eine dritte Größe gleichzeitig mit der mindestens einen ersten Größe (x und vₓ) und der mindestens einen zweiten Größe (p, M und I) der gleichen Wertegruppe ermittelt ist und einen Umgebungsparameter wiedergibt.

2. Prognosesystem (10) nach Anspruch 1, wobei die erste Elektronikeinrichtung (10a) und/oder die zweite Elektronikeinrichtung (10b) dazu ausgelegt und/oder programmiert sind, die Wertegruppen in ein Koordinatensystem einzutragen mit mindestens einer die mindestens eine erste Größe (x und vₓ) anzeigenden ersten Achse und mindestens einer die mindestens eine zweite Größe (p, M und I) anzeigenden zweiten Achse.

3. Prognosesystem (10) nach Anspruch 1 oder 2, wobei die erste Elektronikeinrichtung (10a) zusätzlich dazu ausgelegt und/oder programmiert ist, Wertegruppen zu ermitteln, welche zusätzlich zu der mindestens einen ersten Größe (x und vₓ) und der mindestens einen zweiten Größe (p, M und I) noch einen Reibwert einer gleichzeitig von dem Fahrzeug (12) befahrenen Fahrbahn als den Umgebungsparameter umfassen.

4. Prognosesystem (10) nach Anspruch 2 und 3, wobei die erste Elektronikeinrichtung (10a) und/oder die zweite Elektronikeinrichtung (10b) dazu ausgelegt und/oder programmiert sind, die Wertegruppen in das Koordinatensystem einzutragen, welches zusätzlich zu der mindestens einen ersten Achse und der mindestens einen zweiten Achse noch mindestens eine den Reibwert anzeigende Reibwert-Achse oder den Reibwert anzeigende Sektoren in einer von der oder einer der ersten Achsen und der oder einer der zweiten Achsen aufgespannten Ebene umfasst.

5. Prognosesystem (10) nach einem der Ansprüche 2 bis 4, wobei die erste Elektronikeinrichtung (10a) und/oder die zweite Elektronikeinrichtung (10b) dazu ausgelegt und/oder programmiert sind, die Wertegruppen in das Koordinatensystem einzutragen, welches zusätzlich zu der mindestens einen ersten Achse und der mindestens einen zweiten Achse noch mindestens eine die mindestens eine dritte Größe anzeigende dritte Achse umfasst.

6. Prognosesystem (10) nach Anspruch 2, 4 oder 5, wobei die erste Elektronikeinrichtung (10a) und/oder die zweite Elektronikeinrichtung (10b) dazu ausgelegt und/oder programmiert sind, den in das Koordinatensystem eingetragenen Wertegruppen jeweils Bremsenbetriebspunkte zuzuordnen und unter zusätzlicher Berücksichtigung einer Verteilung der Bremsenbetriebspunkte abzuschätzen, ob ein Auftreten zumindest einer Funktionsbeeinträchtigung an zumindest der einen Bremssystemkomponente des Bremssystems zumindest während des vorgegebenen Prognosezeitintervalls wahrscheinlich ist.

7. Prognosesystem (10) nach einem der vorhergehenden Ansprüche, wobei die erste Elektronikeinrichtung (10a) an dem Fahrzeug (12) montierbar oder montiert ist und dazu ausgelegt und/oder programmiert, eine erste Kommunikationseinrichtung (14a) der ersten Elektronikeinrichtung (10a) oder des mit der ersten Elektronikeinrichtung (10a) ausgestatteten Fahrzeugs (12) dazu anzusteuern, Daten (16) umfassend die ermittelten Wertegruppen und/oder mindestens ein Koordinatensystem mit den ermittelten Wertegruppen an eine zweite Kommunikationseinrichtung (14b) der getrennt von dem Fahrzeug (12) vorliegenden zweiten Elektronikeinrichtung (10b) zu übermitteln, und wobei die zweite Kommunikationseinrichtung (10b) dazu ausgelegt ist, die von der ersten Kommunikationseinrichtung (14a) übermittelten Wertegruppen zu empfangen.

8. Prognoseverfahren für zumindest eine Bremssystemkomponente eines Bremssystems eines Fahrzeugs (12) mit den Schritten:
Ermitteln von Wertegruppen von je mindestens zwei unterschiedlichen Größen (x, vₓ, p, M und I) während mindestens einer fahrerinduzierten und/oder autonomen Bremsung des Fahrzeugs (12), wobei die mindestens zwei Größen (x, vₓ, p, M und I) der gleichen Wertegruppe gleichzeitig und in einer Bremssituation ermittelt werden, in welcher mindestens eine der Größen (x, vₓ, p, M und I) außerhalb ihres jeweils vorgegebenen Normalwertebereichs liegt und/oder eine zeitliche Ableitung mindestens einer der Größen (x, vₓ, p, M und I) außerhalb eines der jeweiligen Größe (x, vₓ, p, M und I) jeweils vorgegebenen quasistatischen Bereichs liegt, und wobei mindestens eine erste Größe (x und vₓ) der mindestens zwei Größen (x, vₓ, p, M und I) jeweils eine Bremspedalbetätigung durch einen Fahrer des Fahrzeugs (12) und/oder eine Bremswunschvorgabe einer Brems- oder Fahrsteuerautomatik und/oder eines Reglers des Fahrzeugs (12) wiedergibt und mindestens eine zweite Größe (p, M und I) der mindestens zwei Größen (x, vₓ, p, M und I) jeweils eine Reaktion zumindest der einen Bremssystemkomponente des Bremssystems auf die Bremspedalbetätigung und/oder die mindestens eine Bremswunschvorgabegröße, einen Zustand an und/oder in zumindest der einen Bremssystemkomponente und/oder eine physikalische Größe (M) des mittels des Bremssystems abgebremsten Fahrzeugs (12) wiedergibt (S1); und
Abschätzen anhand der ermittelten Wertegruppen, ob ein Auftreten zumindest einer Funktionsbeeinträchtigung an zumindest der einen Bremssystemkomponente des Bremssystems zumindest während eines vorgegebenen Prognosezeitintervalls wahrscheinlich ist (S2);
**dadurch gekennzeichnet, dass**
Wertegruppen ermittelt werden, welche zusätzlich zu der mindestens einen ersten Größe (x und vₓ) und der mindestens einen zweiten Größe (p, M und I) noch mindestens eine dritte Größe umfassen, wobei die mindestens eine dritte Größe gleichzeitig mit der mindestens einen ersten Größe (x und vₓ) und der mindestens einen zweiten Größe (p, M und I) der gleichen Wertegruppe ermittelt wird und einen Umgebungsparameter wiedergibt.

9. Prognoseverfahren nach Anspruch 8, wobei als die mindestens eine erste Größe (x und vₓ) ein Stangenweg (x) einer an dem Bremspedal angebundenen Eingangsstange, eine Verstellgeschwindigkeit (vₓ) der Eingangsstange, eine von der Brems- oder Fahrsteuerautomatik und/oder dem Regler angeforderte Soll-Motorstromstärke eines Motors einer motorisierten Bremsdruckaufbauvorrichtung des Bremssystems, eine von der Brems- oder Fahrsteuerautomatik und/oder dem Regler angeforderte Soll-Betriebsspannung des Motors der motorisierten Bremsdruckaufbauvorrichtung, ein von der Brems- oder Fahrsteuerautomatik und/oder dem Regler angefordertes Soll-Motordrehmoment des Motors der motorisierten Bremsdruckaufbauvorrichtung, eine von der Brems- oder Fahrsteuerautomatik und/oder dem Regler angeforderte Soll-Leistungsaufnahme des Motors der motorisierten Bremsdruckaufbauvorrichtung, ein von der Brems- oder Fahrsteuerautomatik und/oder dem Regler angeforderter Soll-Verstellweg mindestens eines verstellbaren Kolbens der motorisierten Bremsdruckaufbauvorrichtung und/oder eine von der Brems- oder Fahrsteuerautomatik und/oder dem Regler angeforderte Soll-Pumprate mindestens einer in dem Bremssystem eingesetzten Pumpe ermittelt werden.

10. Prognoseverfahren nach Anspruch 8 oder 9, wobei als die mindestens eine zweite Größe (p, M und I) ein Hauptbremszylinderdruck (p) in einem Hauptbremszylinder des Bremssystems, mindestens ein Bremsdruck in mindestens einem Radbremszylinder des Bremssystems, eine Motorstromstärke (I) des Motors der motorisierten Bremsdruckaufbauvorrichtung des Bremssystems, eine Betriebsspannung des Motors der motorisierten Bremsdruckaufbauvorrichtung, ein Motordrehmoment des Motors der motorisierten Bremsdruckaufbauvorrichtung, eine Leistungsaufnahme des Motors der motorisierten Bremsdruckaufbauvorrichtung, ein Verstellweg des mindestens einen verstellbaren Kolbens der motorisierten Bremsdruckaufbauvorrichtung, eine Reglerzustand-Information über eine eventuell ausgeführte Bremsdruck-Regelung oder eine eventuell ausgeführte Fahrdynamik-Regelung, mindestens eine Temperatur an und/oder in zumindest der motorisierten Bremsdruckaufbauvorrichtung, eine Pumprate der mindestens einen in dem Bremssystem eingesetzten Pumpe, ein Getriebewirkungsgrad eines an der motorisierten Bremsdruckaufbauvorrichtung angebundenen Getriebes des Bremssystems, mindestens ein Schaltzustand mindestens eines Ventils des Bremssystems, eine mittels des Bremssystems auf das Fahrzeug (12) bewirkte Bremskraft, ein mittels des Bremssystems auf das Fahrzeug (12) bewirktes Bremsmoment (M), ein Lenkwinkel des Fahrzeugs (12), eine Gierrate des Fahrzeugs (12), eine mittels des Bremssystems auf das Fahrzeug (12) bewirkte Fahrzeugverzögerung, eine Längsgeschwindigkeit des Fahrzeugs (12), eine Quergeschwindigkeit des Fahrzeugs (12), eine Querbeschleunigung des Fahrzeugs (12) und/oder eine Bordnetzspannung eines Bordnetzes des Fahrzeugs (12) ermittelt werden.

11. Prognoseverfahren nach einem der Ansprüche 8 bis 10, wobei als die mindestens eine dritte Größe ein Reibwert einer gleichzeitig von dem Fahrzeug (12) befahrenen Fahrbahn, ein Fahrbahnneigungswinkel, ein Scheibenwischerstatus und/oder eine Außentemperatur ermittelt werden.

## Claims

1. Prediction system (10) for at least one brake system component of a brake system of a vehicle (12), comprising:
a first electronic device (10a), which is designed and/or programmed to determine during at least one driver-induced and/or autonomous braking operation of the vehicle (12) value groups, each of at least two different variables (x, vₓ, p, M and I), wherein, by means of the first electronic device (10a), the at least two variables (x, vₓ, p, M and I) of the same value group can be determined simultaneously and in a braking situation in which at least one of the variables (x, vₓ, p, M and I) lies outside its respectively specified normal value range and/or a temporal derivative of at least one of the variables (x, vₓ, p, M and I) lies outside a quasi-static range respectively specified for the respective variable (x, vₓ, p, M and I), and wherein at least one first variable (x and vₓ) of the at least two variables (x, vₓ, p, M and I) represents in each case a brake pedal actuation by a driver of the vehicle (12) and/or a brake request specification from an automatic braking or driving control system and/or a controller of the vehicle (12) and at least one second variable (p, M and I) of the at least two variables (x, vₓ, p, M and I) represents in each case a response of at least the one brake system component of the brake system to the brake pedal actuation and/or the brake request specification variable, a state on and/or in at least the one brake system component and/or a physical variable (M) of the vehicle (12) braked by means of the brake system;
wherein the first electronic device (10a) and/or a second electronic device (10b) of the prediction system (10) is designed and/or programmed to estimate on the basis of the determined value groups whether an occurrence of at least one functional impairment of at least the one brake system component of the brake system is probable at least during a specified prediction time interval;
**characterized in that**
the first electronic device (10a) is additionally designed and/or programmed to determine value groups which, in addition to the at least one first variable (x and vₓ) and the at least one second variable (p, M and I), also include at least one third variable, wherein the at least one third variable is determined at the same time as the at least one first variable (x and vₓ) and the at least one second variable (p, M and I) of the same value group and represents an environmental parameter.

2. Prediction system (10) according to Claim 1, wherein the first electronic device (10a) and/or the second electronic device (10b) are designed and/or programmed to enter the value groups into a coordinate system with at least one first axis indicating the at least one first variable (x and vₓ) and at least one second axis indicating the at least one second variable (p, M and I).

3. Prediction system (10) according to Claim 1 or 2, wherein the first electronic device (10a) is additionally designed and/or programmed to determine value groups which, in addition to the at least one first variable (x and vₓ) and the at least one second variable (p, M and I), also include as the environmental parameter a friction coefficient of a road on which the vehicle (12) is at the same time travelling.

4. Prediction system (10) according to Claim 2 or 3, wherein the first electronic device (10a) and/or the second electronic device (10b) are designed and/or programmed to enter the value groups into the coordinate system which, in addition to the at least one first axis and the at least one second axis, also includes at least one friction-coefficient axis indicating the friction coefficient or sectors indicating the friction coefficient in a plane spanned by the or one of the first axes and the or one of the second axes.

5. Prediction system (10) according to one of Claims 2 to 4, wherein the first electronic device (10a) and/or the second electronic device (10b) are designed and/or programmed to enter the value groups into the coordinate system which, in addition to the at least one first axis and the at least one second axis, also includes at least one third axis indicating the at least one third variable.

6. Prediction system (10) according to Claim 2, 4 or 5, wherein the first electronic device (10a) and/or the second electronic device (10b) are designed and/or programmed to assign brake operating points respectively to the value groups entered into the coordinate system and, while additionally taking account of a distribution of the brake operating points, to estimate whether an occurrence of at least one functional impairment of at least the one brake system component of the brake system is probable at least during the specified prediction time interval.

7. Prediction system (10) according to one of the preceding claims, wherein the first electronic device (10a) can be mounted or is mounted on the vehicle (12) and is designed and/or programmed to activate a first communication device (14a) of the first electronic device (10a) or of the vehicle (12) equipped with the first electronic device (10a) to transmit data (16) including the determined value groups and/or at least one coordinate system with the determined value groups to a second communication device (14b) of the second electronic device (10b), which is separate from the vehicle (12), and wherein the second communication device (10b) is designed to receive the value groups transmitted by the first communication device (14a).

8. Prediction method for at least one brake system component of a brake system of a vehicle (12), comprising the following steps:
determining value groups, each of at least two different variables (x, vₓ, p, M and I), during at least one driver-induced and/or autonomous braking operation of the vehicle (12), wherein the at least two variables (x, vₓ, p, M and I) of the same value group are determined simultaneously and in a braking situation in which at least one of the variables (x, vₓ, p, M and I) lies outside its respectively specified normal value range and/or a temporal derivative of at least one of the variables (x, vₓ, p, M and I) lies outside a quasi-static range respectively specified for the respective variable (x, vₓ, p, M and I), and wherein at least one first variable (x and vₓ) of the at least two variables (x, vₓ, p, M and I) represents in each case a brake pedal actuation by a driver of the vehicle (12) and/or a brake request specification from an automatic braking or driving control system and/or a controller of the vehicle (12) and at least one second variable (p, M and I) of the at least two variables (x, vₓ, p, M and I) represents in each case a response of at least the one brake system component of the brake system to the brake pedal actuation and/or the at least one brake request specification variable, a state on and/or in at least the one brake system component and/or a physical variable (M) of the vehicle (12) braked by means of the brake system (S1); and
estimating on the basis of the determined value groups whether an occurrence of at least one functional impairment of at least the one brake system component of the brake system is probable at least during a specified prediction time interval (S2);
**characterized in that**
value groups are determined which, in addition to the at least one first variable (x and vₓ) and the at least one second variable (p, M and I), also include at least one third variable, wherein the at least one third variable is determined at the same time as the at least one first variable (x and vₓ) and the at least one second variable (p, M and I) of the same value group and represents an environmental parameter.

9. Prediction method according to Claim 8, wherein a rod displacement (x) of an input rod connected to the brake pedal, an adjustment speed (vₓ) of the input rod, a target motor current intensity of a motor of a motorized brake-pressure build-up device of the brake system requested by the automatic braking or driving control system and/or the controller, a target operating voltage of the motor of the motorized brake-pressure build-up device requested by the automatic braking or driving control system and/or the controller, a target motor torque of the motor of the motorized brake-pressure build-up device requested by the automatic braking or driving control system and/or the controller, a target power consumption of the motor of the motorized brake-pressure build-up device requested by the automatic braking or driving control system and/or the controller, a target adjustment displacement of at least one adjustable piston of the motorized brake-pressure build-up device requested by the automatic braking or driving control system and/or the controller and/or a target pumping rate of at least one pump used in the brake system requested by the automatic braking or driving control system and/or the controller are determined as the at least one first variable (x and vₓ).

10. Prediction method according to Claim 8 or 9, wherein a master brake cylinder pressure (p) in a master brake cylinder of the brake system, at least one brake pressure in at least one wheel brake cylinder of the brake system, a motor current intensity (I) of the motor of the motorized brake pressure build-up device of the brake system, an operating voltage of the motor of the motorized brake-pressure build-up device, a motor torque of the motor of the motorized brake-pressure build-up device, a power consumption of the motor of the motorized brake-pressure build-up device, an adjustment path of the at least one adjustable piston of the motorized brake-pressure build-up device, controller-state information about a possibly executed brake pressure control or a possibly executed driving dynamics control, at least one temperature at and/or in at least the motorized brake-pressure build-up device, a pumping rate of the at least one pump used in the brake system, a transmission efficiency of a transmission of the brake system connected to the motorized brake-pressure build-up device, at least one switching state of at least one valve of the brake system, a braking force applied to the vehicle (12) by means of the brake system, a braking torque (M) applied to the vehicle (12) by means of the brake system, a steering angle of the vehicle (12), a yaw rate of the vehicle (12), a vehicle deceleration applied to the vehicle (12) by means of the brake system, a longitudinal speed of the vehicle (12), a lateral speed of the vehicle (12), a lateral acceleration of the vehicle (12) and/or an on-board power supply voltage of an on-board power supply of the vehicle (12) are determined as the at least one second variable (p, M and I).

11. Prediction method according to one of Claims 8 to 10, wherein a friction coefficient of a road on which the vehicle (12) is at the same time travelling, a road inclination angle, a windscreen wiper status and/or an outside temperature are determined as the at least one third variable.

## Revendications

1. Système de prévision (10) pour au moins un composant de système de freinage d'un système de freinage d'un véhicule (12), comprenant :
un premier dispositif électronique (10a), lequel est conçu et/ou programmé pour déterminer, pendant au moins un freinage du véhicule (12) induit par le conducteur et/ou autonome, des groupes de valeurs composés chacun d'au moins deux grandeurs différentes (x, vₓ, p, M et I), les au moins deux grandeurs (x, vₓ, p, M et I) du même groupe de valeurs pouvant être déterminées au moyen du premier dispositif électronique (10a) simultanément et dans une situation de freinage dans laquelle au moins l'une des grandeurs (x, vₓ, p, M et l) se trouve en dehors de sa plage de valeurs normales prédéfinies et/ou une dérivée temporelle d'au moins l'une des grandeurs (x, vₓ, p, M et I) se trouve en dehors d'une plage quasi-statique respectivement prédéfinie de la grandeur (x, vₓ, p, M et I) respective, et au moins une première grandeur (x et vₓ) parmi les au moins deux grandeurs (x, vₓ, p, M et I) reproduisant respectivement un actionnement de la pédale de frein par le conducteur du véhicule (12) et/ou une spécification de volonté de freinage d'un système de commande automatique de freinage ou de conduite et/ou d'un régulateur du véhicule (12) et au moins une deuxième grandeur (p, M et i) des au moins deux grandeurs (x, vₓ, p, M et I) reproduisant respectivement une réaction d'au moins ledit un composant de système de freinage du système de freinage à l'actionnement de la pédale de frein et/ou à la grandeur de spécification de volonté de freinage, un état au niveau de et/ou dans au moins ledit un composant de système de freinage et/ou une grandeur physique (M) du véhicule (12) freiné au moyen du système de freinage ;
le premier dispositif électronique (10a) et/ou un deuxième dispositif électronique (10b) du système de prévision (10) étant conçus et/ou programmés pour estimer, à l'aide des groupes de valeurs déterminés, si une apparition d'au moins une défaillance fonctionnelle au niveau d'au moins ledit un composant de système de freinage du système de freinage est probable au moins pendant un intervalle de temps de prévision prédéfini ;
**caractérisé en ce que**
le premier dispositif électronique (10a) est en outre conçu et/ou programmé pour déterminer des groupes de valeurs qui, en plus de l'au moins une première grandeur (x et vₓ) et de l'au moins une deuxième grandeur (p, M et I), comprennent également au moins une troisième grandeur, la troisième grandeur étant déterminée simultanément avec ladite au moins une première grandeur (x et vₓ) et ladite au mois une deuxième grandeur (p, M et I) du même groupe de valeurs et reproduisant un paramètre environnemental.

2. Système de prévision (10) selon la revendication 1, le premier dispositif électronique (10a) et/ou le deuxième dispositif électronique (10b) étant conçus et/ou programmés pour introduire les groupes de valeurs dans un système de coordonnées comportant au moins un premier axe indiquant l'au moins une première grandeur (x et vₓ) et au moins un deuxième axe indiquant l'au moins une deuxième grandeur (p, M et I).

3. Système de prévision (10) selon la revendication 1 ou 2, le premier dispositif électronique (10a) étant en outre conçu et/ou programmé pour déterminer des groupes de valeurs qui, en plus de l'au moins une première grandeur (x et vₓ) et de l'au moins une deuxième grandeur (p, M et I),comprennent également, en tant que le paramètre environnemental, un coefficient de frottement d'une chaussée parcourue simultanément par le véhicule (12).

4. Système de prévision (10) selon les revendications 2 et 3, le premier dispositif électronique (10a) et/ou le deuxième dispositif électronique (10b) étant conçus et/ou programmés pour introduire les groupes de valeurs dans le système de coordonnées, lequel, en plus de l'au moins un premier axe et de l'au moins un deuxième axe, comprend également au moins un axe de coefficient de frottement indiquant le coefficient de frottement ou des secteurs indiquant le coefficient de frottement dans un plan défini par le premier axe ou l'un des premiers axes et le deuxième axe ou l'un des deuxièmes axes.

5. Système de prévision (10) selon l'une des revendications 2 à 4, le premier dispositif électronique (10a) et/ou le deuxième dispositif électronique (10b) étant conçus et/ou programmés pour introduire les groupes de valeurs dans le système de coordonnées, lequel, en plus de l'au moins un premier axe et de l'au moins un deuxième axe, comprend également au moins un troisième axe indiquant l'au moins une troisième grandeur.

6. Système de prévision (10) selon la revendication 2, 4 ou 5, le premier dispositif électronique (10a) et/ou le deuxième dispositif électronique (10b) étant conçus et/ou programmés pour attribuer respectivement des points de fonctionnement de frein aux groupes de valeurs introduits dans le système de coordonnées et pour estimer, en tenant en plus compte d'une répartition des points de fonctionnement de frein, si une apparition d'au moins une défaillance fonctionnelle au niveau d'au moins ledit un composant de système de freinage du système de freinage est probable au moins pendant l'intervalle de temps de prévision prédéfini.

7. Système de prévision (10) selon l'une des revendications précédentes, le premier dispositif électronique (10a) pouvant être monté ou étant monté sur le véhicule (12) et étant conçu et/ou programmé pour commander un premier dispositif de communication (14a) du premier dispositif électronique (10a) ou du véhicule (12) équipé du premier dispositif électronique (10a) en vue de transmettre des données (16) comprenant les groupes de valeurs déterminés et/ou au moins un système de coordonnées comportant les groupes de valeurs déterminés à un deuxième dispositif de communication (14b) du deuxième dispositif électronique (10b) présent séparément du véhicule (12), et le deuxième dispositif de communication (10b) étant conçu pour recevoir les groupes de valeurs transmis par le premier dispositif de communication (14a).

8. Procédé de prévision pour au moins un composant de système de freinage d'un système de freinage d'un véhicule (12), comprenant les étapes suivantes :
détermination de groupes de valeurs composés chacun d'au moins deux grandeurs (x, vₓ, p, M et I) différentes pendant au moins un freinage du véhicule (12) induit par le conducteur et/ou autonome, les au moins deux grandeurs (x, vₓ, p, M et I) du même groupe de valeurs étant déterminés simultanément et dans une situation de freinage dans laquelle au moins l'une des grandeurs (x, vₓ, p, M et I) se trouve en dehors de sa plage de valeurs normales respectivement prédéfinie et/ou une dérivée temporelle d'au moins l'une des grandeurs (x, vₓ, p, M et I) se situe en dehors d'une plage quasi-statique respectivement prédéfinie de la grandeur (x, vₓ, p, M et I) respective, et au moins une première grandeur (x et vₓ) des au moins deux grandeurs (x, vₓ, p, M et I) reproduisant respectivement un actionnement de la pédale de frein par un conducteur du véhicule (12) et/ou une spécification de volonté de freinage d'un système de commande automatique de freinage ou de conduite et/ou d'un régulateur du véhicule (12) et au moins une deuxième grandeur (p, M et I) des au moins deux grandeurs (x, vₓ, p, M et I) reproduisant respectivement une réaction d'au moins ledit un composant de système de freinage du système de freinage à l'actionnement de la pédale de frein et/ou à l'au moins une spécification de volonté de freinage, un état au niveau de et/ou dans au moins ledit un composant de système de freinage et/ou une grandeur physique (M) du véhicule (12) freiné au moyen du système de freinage (S1) ; et
estimation, à l'aide des groupes de valeurs déterminés, si une apparition d'au moins une défaillance fonctionnelle au niveau d'au moins ledit un composant de système de freinage du système de freinage est probable au moins pendant un intervalle de temps de prévision prédéfini (S2) ;
**caractérisé en ce que**
des groupes de valeurs sont déterminés, lesquels, en plus de l'au moins une première grandeur (x et vₓ) et de l'au moins une deuxième grandeur (p, M et I),comprennent également au moins une troisième grandeur, ladite au moins une troisième grandeur étant déterminée simultanément avec ladite au moins une première grandeur (x et vₓ) et ladite au moins une deuxième grandeur (p, M et I) du même groupe de valeurs et reproduisant un paramètre environnemental.

9. Procédé de prévision selon la revendication 8, l'au moins une première grandeur (x et vₓ) déterminée étant une course de tige (x) d'une tige d'entrée reliée à la pédale de frein, une vitesse de positionnement (vₓ) de la tige d'entrée, une intensité de courant moteur de consigne d'un moteur d'un dispositif motorisé de montée en pression de freinage du système de freinage demandée par le système de commande automatique de freinage ou de conduite et/ou le régulateur, une tension de fonctionnement de consigne du moteur du dispositif motorisé de montée en pression de freinage demandée par le système de commande automatique de freinage ou de conduite et/ou le régulateur, un couple moteur de consigne du moteur du dispositif motorisé de montée en pression de freinage demandé par le système de commande automatique de freinage ou de conduite et/ou le régulateur, une puissance consommée de consigne du moteur du dispositif motorisé de montée en pression de freinage demandée par le système de commande automatique de freinage ou de conduite et/ou le régulateur, une course de positionnement de consigne d'au moins un piston mobile du dispositif motorisé de montée en pression de freinage demandée par le système de commande automatique de freinage ou de conduite et/ou le régulateur et/ou un débit de pompage de consigne d'au moins une pompe utilisée dans le système de freinage, demandé par le système de commande automatique de freinage ou de conduite et/ou le régulateur.

10. Procédé de prévision selon la revendication 8 ou 9, l'au moins une deuxième grandeur (p, M et I) déterminée étant une pression de maître-cylindre de frein (p) dans un maître-cylindre de frein du système de freinage, au moins une pression de freinage dans au moins un cylindre de frein de roue du système de freinage, une intensité de courant de moteur (i) du moteur du dispositif de montée en pression de freinage motorisé du système de freinage, une tension de fonctionnement du moteur du dispositif motorisé de montée en pression de freinage, un couple moteur du moteur du dispositif motorisé de montée en pression de freinage, une puissance consommée du moteur du dispositif motorisé de montée en pression de freinage, une course de positionnement d'au moins un piston mobile du dispositif motorisé de montée en pression de freinage, des informations d'état de régulateur à propos d'une régulation de pression de freinage éventuellement exécutée ou d'une régulation de dynamique de conduite éventuellement exécutée, au moins une température au niveau de et/ou dans au moins le dispositif motorisé de montée en pression de freinage, un débit de pompage de l'au moins une pompe utilisée dans le système de freinage, un rendement de transmission d'une transmission du système de freinage reliée au dispositif motorisé de montée en pression de freinage, au moins un état de commutation d'au moins une vanne du système de freinage, une force de freinage produite sur le véhicule (12) au moyen du système de freinage, un couple de freinage (M) produit sur le véhicule (12) au moyen du système de freinage, un angle de braquage du véhicule (12), une vitesse de lacet du véhicule (12), une décélération du véhicule produite sur le véhicule (12) au moyen du système de freinage, une vitesse longitudinale du véhicule (12), une vitesse transversale du véhicule (12), une accélération transversale du véhicule (12) et/ou une tension de réseau de bord d'un réseau de bord du véhicule (12).

11. Procédé de prévision selon l'une des revendications 8 à 10, l'au moins une troisième grandeur déterminée étant un coefficient de frottement d'une chaussée parcourue simultanément par le véhicule (12), un angle d'inclinaison de la chaussée, un état d'essuie-glace et/ou une température extérieure.
